(19) Europäisches Patentamt / European Patent Office / Office européen des brevets

(11) **EP 2 984 139 B1**

(12) **FASCICULE DE BREVET EUROPEEN**

(45) Date de publication et mention de la délivrance du brevet: **26.09.2018 Bulletin 2018/39**

(21) Numéro de dépôt: **14718541.7**

(22) Date de dépôt: **08.04.2014**

(51) Int Cl.:
*C08L 67/04* (2006.01) *C08L 23/02* (2006.01)
*C08L 25/06* (2006.01) *C08L 27/06* (2006.01)
*C08L 33/06* (2006.01) *C08L 75/04* (2006.01)
*C08L 77/00* (2006.01)

(86) Numéro de dépôt international: **PCT/EP2014/057081**

(87) Numéro de publication internationale: **WO 2014/166959 (16.10.2014 Gazette 2014/42)**

(54) **UTILISATION DE POLYMÈRES COMME ADDITIFS DANS UNE MATRICE POLYMÈRE**

VERWENDUNG VON POLYMEREN ALS ZUSATZSTOFFE IN EINEM POLYMERMATRIX

USE OF POLYMERS AS ADDITIVES IN A POLYMER MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2013 FR 1353138**

(43) Date de publication de la demande: **17.02.2016 Bulletin 2016/07**

(73) Titulaires:
- **Université de Bordeaux 33000 Bordeaux (FR)**
- **Institut des Corps Gras Etudes et Recherches Techniques - Iterg 33600 Pessac (FR)**
- **Centre National de la Recherche Scientifique (C.N.R.S.) 75016 Paris (FR)**
- **Institut Polytechnique de Bordeaux 33402 Talence Cedex (FR)**

(72) Inventeurs:
- **CRAMAIL, Henri F-33350 Sainte Terre (FR)**
- **LEBARBE, Thomas F-33000 Bordeaux (FR)**
- **GADENNE, Benoit F-63140 CHATEL GUYON (FR)**
- **ALFOS, Carine F-33600 Pessac (FR)**

(74) Mandataire: **Lavoix 2, place d'Estienne d'Orves 75441 Paris Cedex 09 (FR)**

(56) Documents cités:
**EP-A1- 0 978 536** **WO-A1-95/16750**
**WO-A1-2012/131252** **WO-A1-2012/175338**
**GB-A- 1 416 144** **US-A- 5 011 629**
**US-A- 5 252 642** **US-A- 5 753 782**
**US-A1- 2003 083 440** **US-A1- 2008 071 008**
**US-A1- 2009 030 112** **US-B1- 6 541 568**

- **ROBERTSON M L ET AL: "Tough blends of polylactide and castor oil", ACS APPLIED MATERIALS AND INTERFACES, AMERICAN CHEMICAL SOCIETY, US, vol. 3, no. 9, 28 septembre 2011 (2011-09-28), pages 3402-3410, XP009167069, ISSN: 1944-8244, DOI: 10.1021/AM2006367**
- **HIROKI EBATA ET AL: "Lipase-Catalyzed Synthesis and Curing of High-Molecular-Weight Polyricinoleate", MACROMOLECULAR BIOSCIENCE, WILEY VCH VERLAG, WEINHEIM, DE, vol. 7, no. 6, 7 juin 2007 (2007-06-07), pages 798-803, XP002623189, ISSN: 1616-5187, DOI: 10.1002/MABI.200700018 [extrait le 2007-05-31]**
- **YUAN Y ET AL: "POLYURETHANE TOUGHENED POLYLACTIDE", POLYMER BULLETIN, SPRINGER, HEIDELBERG, DE, vol. 40, no. 4/05, 1 avril 1998 (1998-04-01), pages 485-490, XP000750414, ISSN: 0170-0839, DOI: 10.1007/S002890050280**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 984 139 B1

## Description

La présente invention a pour objet l'utilisation de polymères pour améliorer la résistance aux chocs et/ou aider à la nano-structuration d'une matrice polymère, notamment poly(acide lactique).

La présente invention a également pour objet des compositions comprenant au moins un polymère selon l'invention et une matrice polymère, notamment poly(acide lactique).

Les matériaux thermoplastiques, notamment poly(acide lactique) présentent de manière générale des propriétés mécaniques intéressantes. Cependant, certains matériaux thermoplastiques ont souvent une utilisation limitée en raison de leur caractère cassant caractérisé par une faible résistance à l'impact ainsi qu'une faible déformation à la rupture.

Afin de remédier à ce problème, il a été envisagé de modifier les matériaux thermoplastiques par plastification, par mélange ou bien par copolymérisation. Le mélange de polymères s'est avéré être une bonne technique. Toutefois, il est connu de l'état de la technique que l'utilisation de polymères souples dans une matrice de polymères thermoplastiques, et notamment de matrice PLA, conduit à des problèmes d'incompatibilité, et notamment à une forte ségrégation de phase. De plus, les polymères souples connus de l'état de la technique sont pour la plupart issus de la pétrochimie. Parmi les polymères souples, on peut notamment citer le polybutadiène (Tg=-80°C), le poly(oxyde de propylène) (Tg=-70°C), le poly(ε- caprolactone) (Tg=-60°C).

L'article de Robertson et al. (ACS APPLIED MATERIALS AND INTERFACES. AMERICAN CHEMICAL SOCIEIY, US, vol. 3, no. 9, 28 septembre 2011, pages 3402-3410) concerne l'utilisation de copolymères diblocs poly(acide ricinoléïque)-PLLA comme compatibilisant pour des mélanges PLLA : huile de ricin (résumé et p. 3406, col. droite), le poly(acide ricinoléïque)(PRA) étant utilisé uniquement comme intermédiaire dans la synthèse des copolymères à blocs PRA/PLLA.

Ainsi, il existe un besoin de disposer de nouveaux polymères souples permettant d'améliorer le renfort aux chocs d'une matrice de polymères cassants, et notamment d'une matrice de poly(acide lactique), tout en ne présentant pas les inconvénients des polymères existants susmentionnés. Il existe notamment un besoin de disposer de nouveaux polymères souples pour le renfort de matrice polymère biosourcée.

La présente invention a pour but l'utilisation de polymères, notamment dérivés d'acide ricinoléique, pour améliorer le renfort aux chocs d'une matrice polymère.

Un autre but de l'invention est l'utilisation de polymères, notamment de dérivés d'acide ricinoléique, comme additifs d'une matrice polymère choisie dans le groupe constitué d'une matrice de polyester, de poly(chlorure de vinyle), de polyuréthane, de polyamide, de poly(acrylate d'alkyle), de poly(méthacrylate d'alkyle), de polystyrène et de polyoléfines, et notamment dans une matrice de poly(acide lactique).

Un autre but de l'invention est de fournir de nouvelles compositions à base de polymères et de matrice polymère biosourcés.

La présente invention concerne l'utilisation d'un polymère de formule (I) suivante :

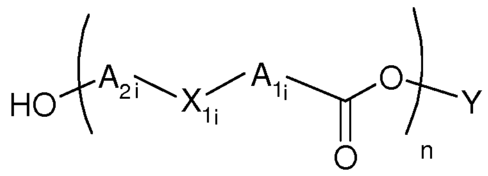

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;
- n représente un nombre entier compris de 2 à 1000, de préférence de 2 à 500, et préférentiellement de 2 à 100 ;

à condition que le nombre total d'atomes de carbone des radicaux $A_{2i}$, $X_{1i}$ et $A_{1i}$ soit supérieur ou égal à 8, de préférence supérieur ou égal à 10 ;
pour la préparation d'additifs dans une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine.

Ainsi, les polymères de formule (I) sont utilisés comme additifs dans une matrice polymère.

La présente invention concerne l'utilisation d'un polymère de formule (I) suivante :

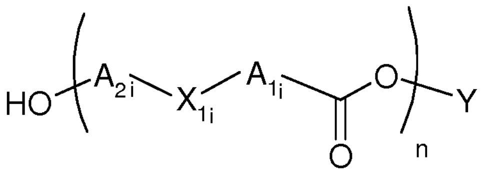

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;
- n représente un nombre entier compris de 2 à 1000, de préférence de 2 à 500, et préférentiellement de 2 à 100 ;

à condition que le nombre total d'atomes de carbone des radicaux $A_{2i}$, $X_{1i}$ et $A_{1i}$ soit supérieur ou égal à 8, de préférence supérieur ou égal à 10 ;
ledit polymère de formule (I) étant différent du poly(acide ricinoléïque) ;
comme additif dans une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine.

Selon un mode de réalisation, la présente invention concerne l'utilisation des polymères de formule (I) susmentionnée, à l'exception du poly(acide ricinoléïque), pour augmenter le renfort aux chocs de la matrice polymère susmentionnée, et/ou pour aider à la nanostructuration de ladite matrice.

La présente invention concerne l'utilisation d'un polymère de formule (I) telle que définie ci-dessus, à l'exception du poly(acide ricinoléïque), dans une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine.

Dans le cadre de l'invention, le poly(acide ricinoléïque) répond à la formule suivante :

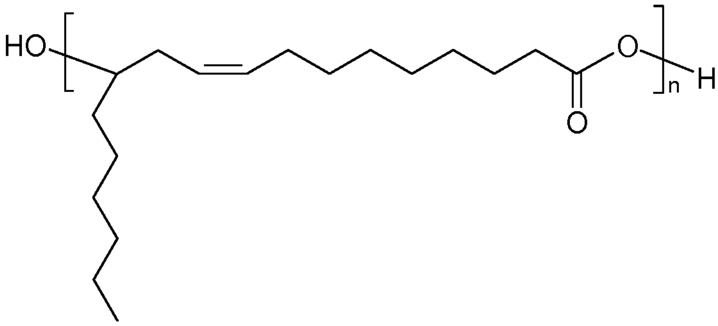

dans lequel n est tel que défini précédemment.

La présente invention concerne donc l'utilisation d'un polymère de formule (I) susmentionnée, à l'exception du poly(acide ricinoléïque) de formule suivante :

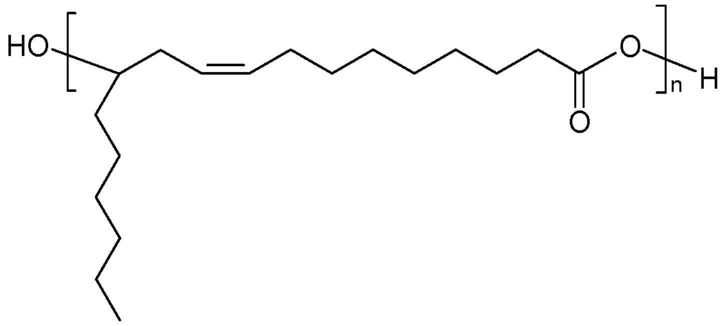

dans lequel n est tel que défini précédemment ;

dans une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine.

Selon un mode de réalisation préféré, dans le cadre de l'utilisation selon l'invention, la teneur en polymère de formule (I) est supérieure ou égale à 5% en masse par rapport à la somme des masses totales dudit polymère de formule (I) et de ladite matrice polymère.

Selon un mode de réalisation préféré, ladite matrice polymère ne comprend pas de composé répondant à l'une des formules (II), (III), (IV), (V) et (VI) suivantes :

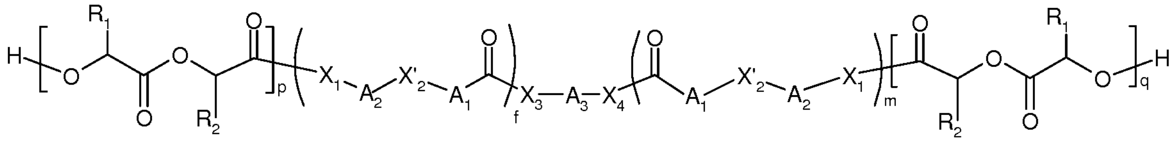

(II)

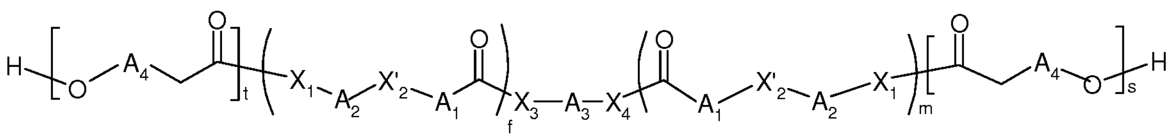

(III)

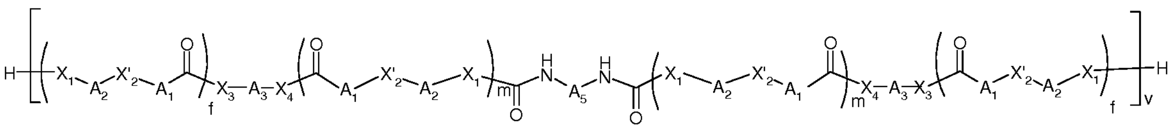

(IV)

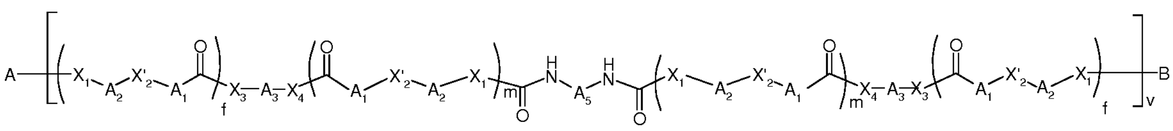

(V)

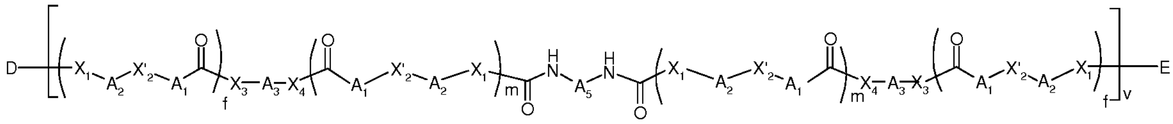

(VI)

dans lesquelles :

- $A_1$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_2$ représente un radical alkylène divalent, linéaire ou ramifié, comprenant de 2 à 20 atomes de carbone, de préférence de 2 à 12, et préférentiellement de 2 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_3$ est choisi dans le groupe constitué des radicaux divalents suivants :

  ◦ un alkylène linéaire ou ramifié, comprenant de 2 à 600 atomes de carbone, de préférence de 2 à 400, et préférentiellement de 2 à 100, ledit radical comprenant éventuellement une ou plusieurs insaturations, étant éventuellement interrompu par au moins un hétéroatome choisi parmi O, N et S, et étant éventuellement substitué par au moins un substituant -OAlk, Alk représentant un groupe alkyle comprenant de 1 à 10 atomes de carbone ; et
  ◦ un arylène comprenant de 6 à 30 atomes de carbone, ledit radical étant éventuellement substitué par au moins un substituant -OAlk, Alk représentant un groupe alkyle comprenant de 1 à 10 atomes de carbone ;

- $X_1$, $X_3$ et $X_4$, identiques ou différents, représentent, indépendamment les uns des autres, -O- ou -NH- ;
- $X'_2$ est choisi dans le groupe constitué de : -S-, $-CH_2-$ et une liaison ; et
- f et m représentent, indépendamment l'un de l'autre, un nombre entier compris de 1 à 1000, de préférence de 1 à 100, et préférentiellement de 1 à 50 ;

à condition que le nombre total d'atomes de carbone des radicaux $A_1$, $A_2$ et $X'_2$ soit supérieur ou égal à 8, de préférence supérieur ou égal à 10 ;

- $R_1$ et $R_2$ représentent, indépendamment l'un de l'autre, H ou un groupe alkyle, linéaire ou ramifié, comprenant de 1 à 20 atomes de carbone, de préférence de 1 à 12, et préférentiellement de 1 à 10, ledit groupe alkyle pouvant éventuellement comprendre au moins une double liaison ou une triple liaison ;
- $A_4$ représente un radical alkylène divalent, linéaire ou ramifié, comprenant de 1 à 20 atomes de carbone, de préférence de 2 à 6, ledit radical comprenant éventuellement au moins une insaturation ;
- $A_5$ est choisi dans le groupe constitué des radicaux :

  ◦ alkylène, linéaire ou ramifié, comprenant de 1 à 20 atomes de carbone, de préférence de 2 à 12, ledit radical comprenant éventuellement au moins une insaturation ;
  ◦ arylène comprenant de 6 à 20 atomes de carbone, de préférence de 6 à 12, ledit radical arylène étant éventuellement substitué ;
  ◦ cycloalkylène, comprenant de 3 à 20 atomes de carbone, de préférence de 5 à 10, ledit radical cycloalkylène étant éventuellement substitué ;
  ◦ cycloalkylène-alkylène-cycloalkylène comprenant de 6 à 30 atomes de carbone ; et
  ◦ alkylène-cycloalkylène comprenant de 4 à 15 atomes de carbone ;

- v représente un nombre entier compris de 1 à 5000, de préférence de 1 à 1000, et préférentiellement de 2 à 500 ;
- A et B représentent les radicaux suivants : A :

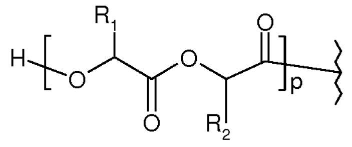

B :

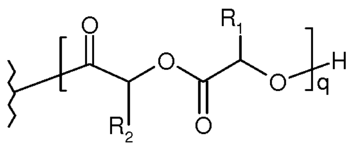

- D et E représentent les radicaux suivants : D :

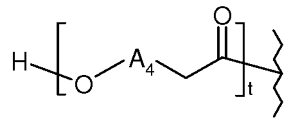

E :

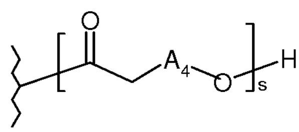

- p et q représentent, indépendamment l'un de l'autre, un nombre entier compris de 1 à 5000, de préférence de 1 à 1000, et préférentiellement de 2 à 500;
- t et s représentent, indépendamment l'un de l'autre, un nombre entier compris de 1 à 5000, de préférence de 1 à 1000, et préférentiellement de 2 à 500.

Dans le cadre de l'utilisation selon l'invention, de préférence, la teneur en polymère de formule (I) dans la matrice polymère susmentionnée est supérieure ou égale à 10% en masse par rapport à la somme des masses totales dudit polymère de formule (I) et de ladite matrice polymère.

Dans le cadre de l'utilisation selon l'invention, de préférence, la teneur en polymère de formule (I) dans la matrice polymère susmentionnée est supérieure ou égale à 15% en masse par rapport à la somme des masses totales dudit polymère de formule (I) et de ladite matrice polymère.

Dans le cadre de l'utilisation selon l'invention, de préférence, la teneur en polymère de formule (I) dans la matrice polymère susmentionnée est supérieure ou égale à 20% en masse par rapport à la somme des masses totales dudit polymère de formule (I) et de ladite matrice polymère.

Selon l'invention, i est un nombre entier prenant toutes les valeurs comprises de 1 à n.

Selon l'invention, les polymères de formule (I) peuvent être représentés par la formule suivante :

$$HO-[B_i]_n-Y$$

dans laquelle chaque $B_i$ représente $-A_{2i}-X_{1i}-A_{1i}-COO-$ pour chaque valeur de i donné, $A_{1i}$, $A_{2i}$, $X_{1i}$, Y, i et n étant tels que définis précédemment.

Selon l'invention, les polymères de formule (I) comprennent les motifs de répétition $B_i$ suivants : $B_i$ :

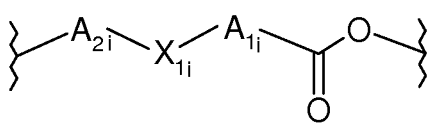

lesdits motifs de répétition $B_i$ étant répétés n fois.

Selon l'invention, les motifs de répétition $B_i$ peuvent être identiques ou différents selon la valeur de i. Ainsi, les groupes $X_{1i}$, $A_{2i}$ et $A_{1i}$ peuvent être identiques ou différents pour chaque motif de répétition.

En particulier, le polymère de formule (I) peut être représenté selon la formule suivante :

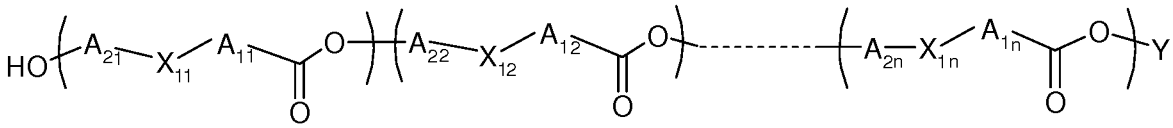

Selon un mode de réalisation, les motifs $B_i$ sont identiques.

Selon un mode de réalisation, la présente invention concerne l'utilisation à titre d'additifs, des polymères de formule (I-1) suivante :

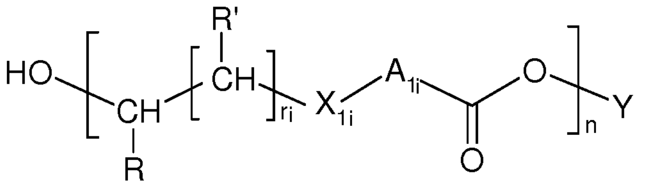

(I-1)

dans laquelle :

- $X_{1i}$, $A_{1i}$, Y et n sont tels que définis précédemment ;
- R représente H ou un radical alkyle divalent, linéaire ou ramifié, comprenant de 1 à 20 atomes de carbone, de préférence de 2 à 10, préférentiellement de 4 à 9, ledit radical alkyle étant éventuellement substitué par au moins un groupe OAlk, Alk étant tel que défini précédemment ;
- R' représente H ou un groupe OAlk, Alk étant tel que défini précédemment ;
- $r_i$ représente un nombre entier compris de 0 à 5, de préférence de 0 à 2.

Selon un mode de réalisation, la présente invention concerne l'utilisation à titre d'additifs, des polymères de formule (I-1) suivante :

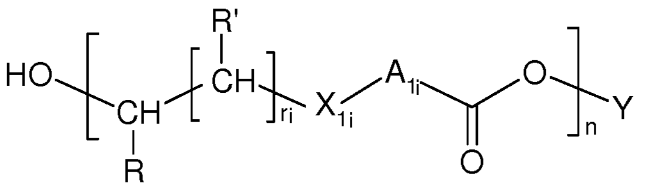

(I-1)

dans laquelle :

- $X_{1i}$, $A_{1i}$, Y et n sont tels que définis précédemment ;
- R représente H ou un radical alkyle divalent, linéaire ou ramifié, comprenant de 1 à 20 atomes de carbone, de préférence de 2 à 10, préférentiellement de 4 à 9, ledit radical alkyle étant éventuellement substitué par au moins un groupe OAlk, Alk étant tel que défini précédemment ;
- R' représente H ou un groupe OAlk, Alk étant tel que défini précédemment ;
- $r_i$ représente un nombre entier compris de 0 à 5, de préférence de 0 à 2, ledit polymère de formule (I-1) étant différent du poly(acide ricinoléïque).

Selon l'invention, les polymères de formule (I-1) correspondent à des composés de formule (I) dans laquelle au moins un groupe $A_{2i}$ représente $-CH(R)-[CH(R')]_{ri}-$.

Selon un mode de réalisation, tous les groupes $A_{2i}$ représentent $-CH(R)-[CH(R')]_{ri}-$.

De préférence, dans les formules (I) et (I-1), n est compris de 2 à 1000, de préférence de 2 à 500, et préférentiellement de 2 à 100.

Selon un mode de réalisation, dans les polymères de formules (I) et (I-1), au moins un groupe $A_{1i}$ comprend

une insaturation.

Selon un mode de réalisation, dans les polymères de formules (I) et (I-1), au moins un groupe $A_{1i}$ n'est pas substitué.

Selon un mode de réalisation, dans les polymères de formules (I) et (I-1), au moins un groupe $A_{1i}$ représente un radical alkylène comprenant 2 à 9 atomes de carbone, de préférence de 6 à 9 atomes de carbone.

Selon un mode de réalisation, dans les polymères de formules (I) et (I-1), au moins un groupe $A_{1i}$ représente un radical alkylène linéaire comprenant 9 atomes de carbone et une insaturation. De préférence, au moins un groupe $A_{1i}$ représente $-CH=CH-(CH_2)_7-$.

Selon un mode de réalisation, dans les polymères de formules (I) et (I-1), au moins un groupe $A_{1i}$ représente $-(CH_2)_7-$.

Selon un mode de réalisation, dans les polymères de formules (I) et (I-1), au moins un groupe $A_{1i}$ représente $-(CH_2)_6-$.

Selon un mode de réalisation, dans les polymères de formules (I) et (I-1), au moins un groupe $A_{1i}$ représente $-(CH_2)_{10}-$.

Selon un mode de réalisation, dans les polymères de formules (I) et (I-1), au moins un groupe $A_{1i}$ représente un radical alkylène ramifié, comprenant 17 atomes de carbone. De préférence,au moins un groupe $A_{1i}$ représente $-CH[(CH_2)_7CH_3]-(CH_2)_8-$.

Selon un mode de réalisation, dans les polymères de formules (I) et (I-1), tous les groupes $A_{1i}$ sont identiques pour chaque motif de répétition.

Selon un mode de réalisation, dans les polymères de formules (I) et (I-1), au moins un groupe $X_{1i}$ représente une liaison.

Selon un autre mode de réalisation, dans les polymères de formules (I) et (I-1), le groupe $X_{1i}$ représente $-CH_2-$.

Selon un mode de réalisation, dans les polymères de formules (I) et (I-1), le groupe $X_{1i}$ représente S.

Selon un mode de réalisation, dans les polymères de formules (I) et (I-1), tous les groupes $X_{1i}$ sont identiques pour chaque motif de répétition.

Selon un mode de réalisation, dans les polymères de formules (I) et (I-1), le groupe Y représente H.

Selon un mode de réalisation, dans les polymères de formules (I) et (I-1), le groupe Y représente un groupe alkyle comprenant de 1 à 10 atomes de carbone, et de préférence un groupe méthyle.

Selon un mode de réalisation, dans les polymères de formule (I), au moins un groupe $A_{2i}$ représente un radical alkylène linéaire comprenant deux atomes de carbone, et éventuellement substitué par un groupe OAlk, notamment un groupe OMe.

De préférence, au moins un groupe $A_{2i}$ représente $-CH_2CH(OMe)-$ ou $-CH_2CH_2-$.

Selon un autre mode de réalisation, dans les polymères de formule (I), au moins un groupe $A_{2i}$ représente un radical alkylène ramifié comprenant de 2 à 10 atomes de carbone, éventuellement substitué par un groupe OAlk, notamment un groupe OMe. De préférence, au moins un groupe $A_{2i}$ représente $-CH[(CH_2)_5CH_3]-$, $-CH[(CH_2)_7CH_3]-CH(OMe)-$, $-CH(CH_2OMe)-$, ou $-CH[CH(OMe)-(CH_2)_7-CH_3]-$.

Selon un mode de réalisation, dans les polymères de formules (I) et (I-1), tous les groupes $A_{2i}$ sont identiques pour chaque motif de répétition.

Selon un mode de réalisation, dans les polymères de formule (I-1), au moins un $r_i$ représente 0 ou 1.

Selon un mode de réalisation, dans les polymères de formules (I) et (I-1), tous les $r_i$ sont identiques pour chaque motif de répétition.

Selon un mode de réalisation, dans les polymères de formule (I-1), au moins un groupe R' représente H.

Selon un mode de réalisation, dans les polymères de formule (I-1), au moins un groupe R' représente OAlk, et notamment OMe.

Selon un mode de réalisation, dans les polymères de formule (I-1), au moins un groupe R représente H.

Selon un mode de réalisation, dans les polymères de formule (I-1), au moins un groupe R représente $-(CH_2)_5CH_3$.

Selon un mode de réalisation, dans les polymères de formule (I-1), au moins un groupe R représente $-(CH_2)_7CH_3$.

Selon un mode de réalisation, dans les polymères de formule (I-1), au moins un groupe R représente $-CH_2OMe$.

Selon un mode de réalisation, dans les polymères de formule (I-1), au moins un groupe R représente $-CH[(CH_2)_7CH_3](OMe)-$.

Selon un mode de réalisation, dans les polymères de formules (I) et (I-1), tous les groupes R sont identiques pour chaque motif de répétition.

Selon un mode de réalisation, dans les polymères de formules (I) et (I-1), tous les groupes R' sont identiques pour chaque motif de répétition.

Selon un mode de réalisation particulier, les polymères de formules (I) et (I-1) sont choisis dans le groupe constitué des polymères répondant à l'une des formules suivantes :

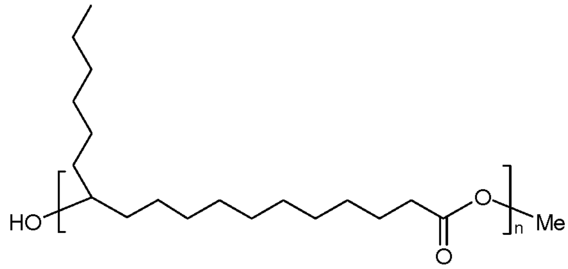

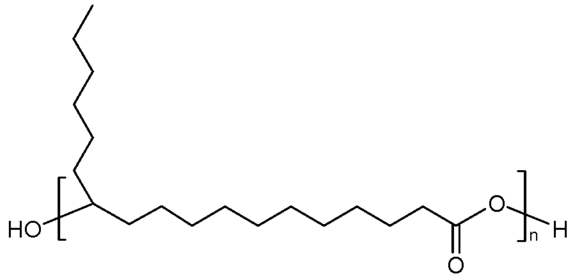

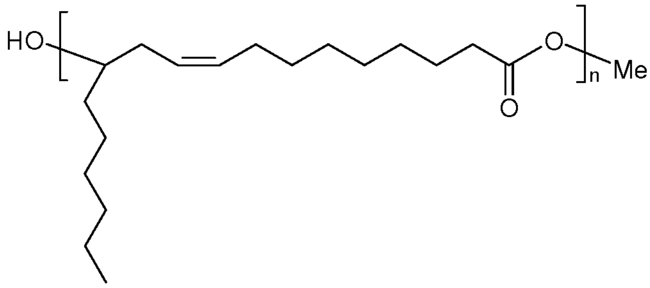

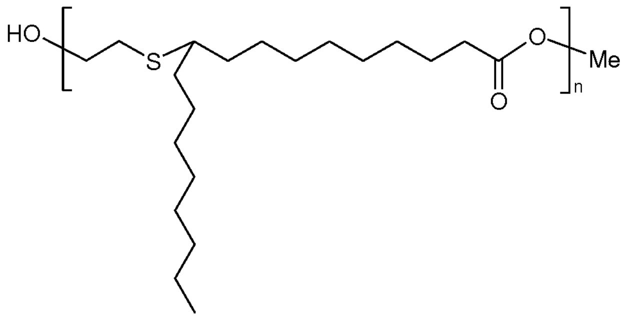

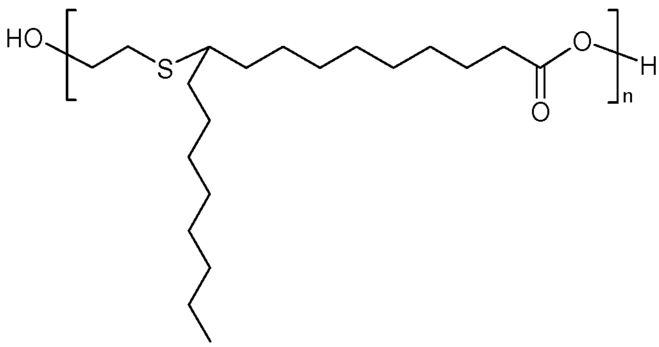

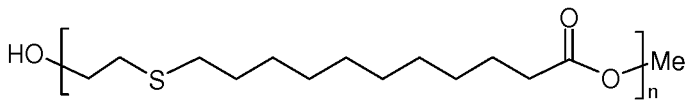

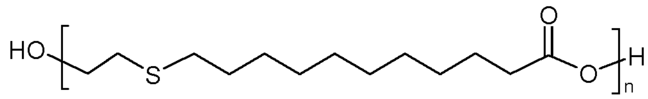

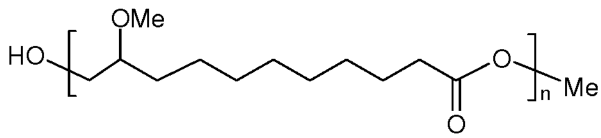

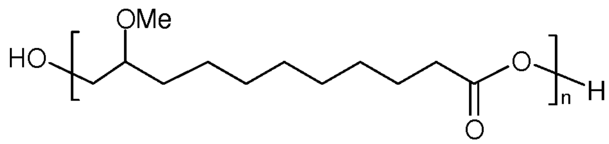

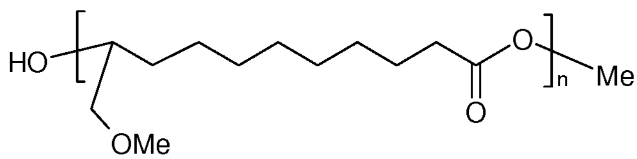

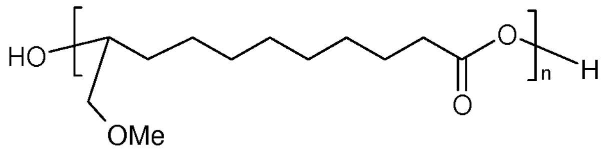

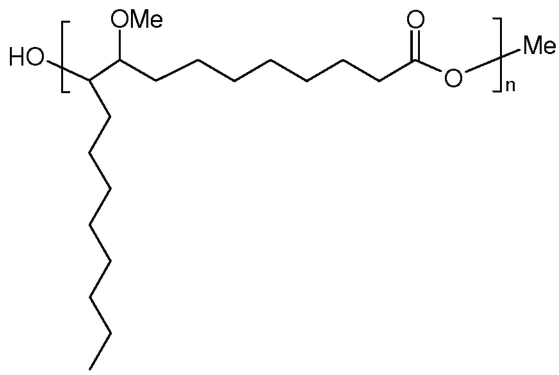

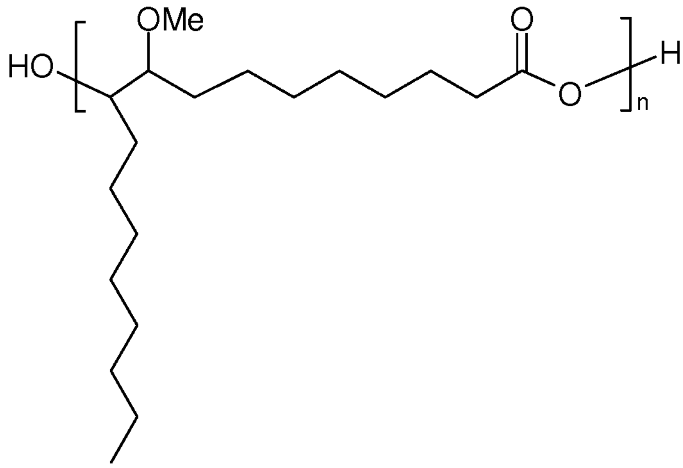

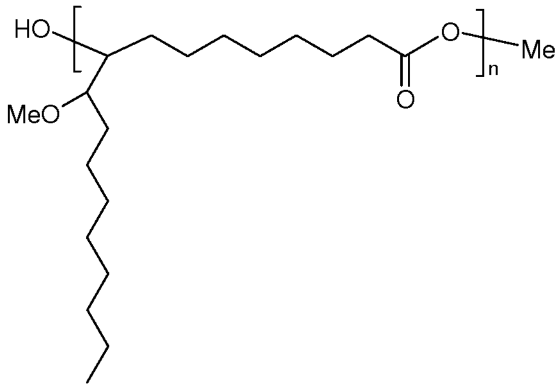

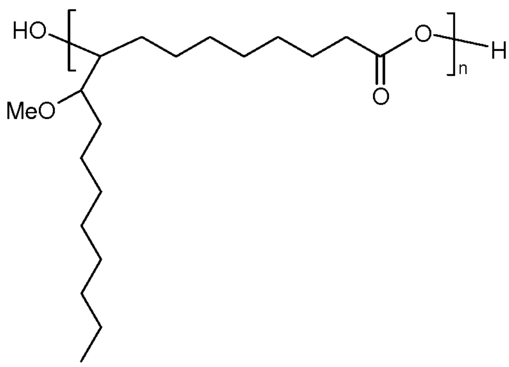

n étant tel que défini précédemment.

De préférence, l'additif selon l'invention est le polymère suivant :

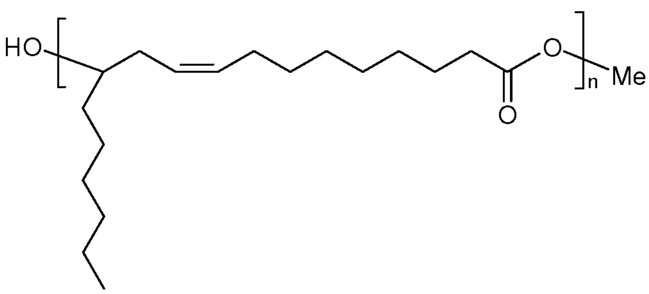

dans lequel n est tel que défini précédemment. Ce polymère correspond au poly(ricinoléate de méthyle).

Selon un mode de réalisation, le poly(ricinoléate de méthyle) susmentionné a une masse moléculaire en nombre comprise de 1 000 g/mol à 30 000 g/mol.

Selon un mode de réalisation, le poly(ricinoléate de méthyle) susmentionné a un indice de polydispersité compris de 1,2 à 3.

Dans le cadre de l'invention, et sauf mention contraire, on entend par « additifs », les composés de formules (I) ou (I-1) qui sont ajoutés dans une matrice de polymère.

Dans le cadre de l'invention, et sauf mention contraire, les « composés de formule (I) ou (I-1) » sont des « polymères de formule (I) ou (I-1) ».

Dans le cadre de l'invention, et sauf mention contraire, on entend par « matrice polymère », « matrice de polymère » ou « matrice polymérique », une phase dispersante majoritaire et continue d'un polymère comprenant une phase dispersée et discontinue comprenant un ou plusieurs additifs selon l'invention, et éventuellement au moins un polymère souple. On peut par exemple citer une matrice de poly(acide lactique).

Selon l'invention, une matrice de polyester peut être notamment choisie dans le groupe constituée des matrices de poly(acide lactique), de poly(acide glycolique), de poly($\varepsilon$ caprolactone) et de poly(butyro lactone).

Selon l'invention, une matrice de poly(acrylate d'alkyle) peut être notamment une matrice de poly(acrylate de méthyle) ou de poly(acrylate de butyle).

En particulier, une matrice de poly(méthacrylate d'alkyle) est une matrice de poly(méthacrylate de méthyle).

Selon un mode de réalisation, la matrice polymérique n'est pas une matrice polycarbonate.

Selon un mode de réalisation, la présente invention concerne l'utilisation des polymères de formules (I) ou (I-1) susmentionnées pour augmenter le renfort aux chocs de la matrice polymère susmentionnée, et/ou pour aider à la nanostructuration de ladite matrice.

Selon un mode de réalisation, la présente invention concerne l'amélioration des propriétés mécaniques des matériaux thermoplastiques, en particulier la résistance aux chocs, ainsi que la nano-structuration d'une matrice polymère, notamment une matrice poly(acide lactique).

Selon un mode de réalisation, l'utilisation des polymères de formules (I) ou (I-1) susmentionnée, à l'exception du poly(acide ricinoléïque) permet une élongation à la rupture d'une matrice de poly(acide lactique) de 3 à 50 fois plus élevée par rapport à celle de ladite matrice seule, de préférence de 35 à 50 fois plus élevée.

De préférence, l'utilisation des polymères de formule (I) ou (I-1) susmentionnée permet une élongation à la rupture d'une matrice de poly(acide lactique) de 3,5 à 50, de préférence de 35 à 50.

Dans le cadre de l'invention, et sauf mention contraire, on entend par « élongation à la rupture » ou « allongement à la rupture », ou « A% », la capacité d'un matériau à s'allonger avant de rompre lorsqu'il est sollicité en traction. Cette caractéristique se détermine par un essai de traction selon l'expression suivante :

$$A\% = 100 \cdot \frac{L_u - L_o}{L_o}$$

- Lu représentant la longueur finale juste avant la rupture ;
- Lo représentant la longueur initiale avant le début de l'essai de traction.

Lu et Lo étant exprimées dans la même unité, en particulier en millimètre.

Dans le cadre de l'invention, le taux de cristallinité peut être mesuré selon l'équation suivante :

$$\chi_c = \frac{\Delta H_m - \Delta H_{cc}}{\Delta H_m^0} \times \frac{1}{\omega}$$

où $\Delta H_m$ est l'enthalpie de fusion du PLLA, $\Delta H_{cc}$ l'enthalpie de cristallisation à froid, $\Delta H_m^0$ l'enthalpie de fusion d'un PLLA 100% cristallin (93 J/g) et $\omega$ la fraction massique de PLLA dans un mélange.

Selon un mode de réalisation, l'utilisation des polymères de formules (I) ou (I-1) susmentionnées, à l'exception du poly(acide ricinoléïque), est telle que le taux de cristallinité de la matrice de poly(acide lactique) est compris de 38% à 50%.

Dans le cadre de l'invention, et sauf mention contraire, on entend par « renfort aux chocs » une amélioration des propriétés mécaniques (meilleur allongement à la rupture, diminution du caractère cassant du matériau), notamment par dispersion d'un additif dans la matrice permettant ledit renfort au choc.

Dans le cadre de l'invention, et sauf mention contraire, on entend par « aide à la nanostructuration d'une matrice», une aide à la cristallisation et/ou une aide à la ségrégation de phase de ladite matrice selon les lois de la

thermodynamique, conduisant notamment à l'obtention de phases cylindriques, lamellaires, gyroïdes..

Selon un mode de réalisation, la matrice est de type polyester, et en particulier de type poly(acide lactique) (PLA). De préférence, la matrice est de type poly(acide L-lactique).

Selon un mode de réalisation, la matrice PLA susmentionnée a une masse moléculaire en nombre comprise de 50 000 g/mol à 500 000 g/mol.

Selon un mode de réalisation, la matrice PLA susmentionnée a un indice de polydispersité compris de 1,1 à 3.

Parmi les radicaux "alkyle", on peut notamment citer, lorsqu'ils sont linéaires, les radicaux méthyle, éthyle, propyle, butyle, pentyle, hexyle, octyle, nonyle et décyle. On peut notamment citer, lorsqu'ils sont ramifiés ou substitués par un ou plusieurs radicaux alkyles, les radicaux isopropyle, tert-butyle, 2-éthylhexyle, 2-méthylbutyle, 2-méthylpentyle, 1-méthylpentyle et 3-méthylheptyle.

Dans le cadre de la présente invention, les radicaux "alkylène" représentent des radicaux (également nommés alkylidène) dérivés des alcanes dont les deux atomes d'hydrogène terminaux ont été supprimés. Lorsque lesdits radicaux alkylène sont linéaires, ils peuvent être représentés par la formule $-(CH_2)_k-$, k correspondant au nombre d'atomes de carbone de l'alcane dont est issu le radical alkylène.

La présente invention concerne également une composition comprenant :

- une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- au moins un polymère de formule (I) susmentionnée, à l'exception du poly(acide ricinoléique) ; et
- éventuellement au moins un autre polymère notamment choisi parmi le poly(butadiène), le poly(isoprène), le poly(ε-caprolactone), le poly(tétrahydrofurane), poly(propylène glycol) et le poly(oxyde de propylène).

Ainsi, la composition susmentionnée de l'invention ne comprend pas de poly(acide ricinoléïque).

Selon un mode de réalisation, l'invention concerne une composition comprenant une matrice de poly(acide lactique), et au moins un polymère répondant à l'une des formules (I), (I-1) ou leurs mélanges, à l'exception du poly(acide ricinoléïque).

Selon un mode de réalisation, l'invention concerne une composition comprenant une matrice de poly(acide lactique), et au moins 5% en masse d'un polymère répondant à l'une des formules (I), (I-1) ou leurs mélanges, à l'exception du poly(acide ricinoléïque), par rapport à la masse totale de ladite composition.

Selon un mode de réalisation, l'invention concerne des compositions comprenant de 5% à 20% en masse d'un copolymère de formule (I) à l'exception du poly(acide ricinoléïque), par rapport à la masse totale de la composition.

Selon un mode de réalisation, l'invention concerne des compositions comprenant de 60% à 95% en masse, de préférence de 80% à 90%, de la matrice polymère susmentionnée.

La présente invention concerne également une composition constituée :

- d'une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- d'au moins un polymère de formule (I) susmentionnée ; et
- d'éventuellement au moins un autre polymère notamment choisi parmi le poly(butadiène), le poly(isoprène), le poly(ε-caprolactone), le poly(tétrahydrofurane), poly(propylène glycol) et le poly(oxyde de propylène).

A titre de polymères de formule (I) dans les compositions de l'invention, on peut citer ceux répondant à la formule suivante :

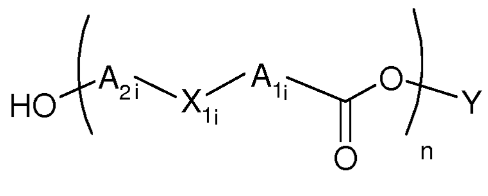

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs

insaturations, et étant éventuellement substitué par au moins un substituant -OAlk, Alk représentant un groupe alkyle comprenant de 1 à 10 atomes de carbone ;

- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;
- n représente un nombre entier compris de 2 à 1000, de préférence de 2 à 500, et préférentiellement de 2 à 100 ;

à condition que le nombre total d'atomes de carbone des radicaux $A_{2i}$, $X_{1i}$ et $A_{1i}$ soit supérieur ou égal à 8, de préférence supérieur ou égal à 10.

On peut en particulier citer le polymère de formule (I) suivante :

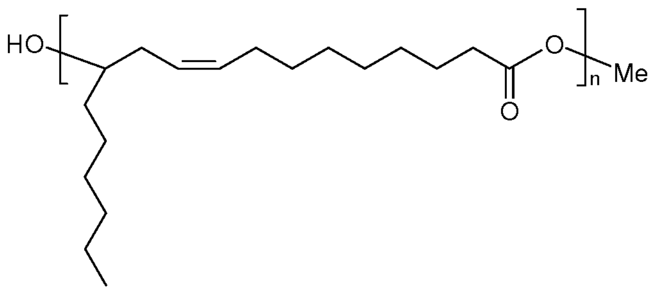

dans lequel n est tel que défini précédemment. Ce polymère correspond au poly(ricinoléate de méthyle).

On peut en particulier citer le polymère de formule (I) suivante :

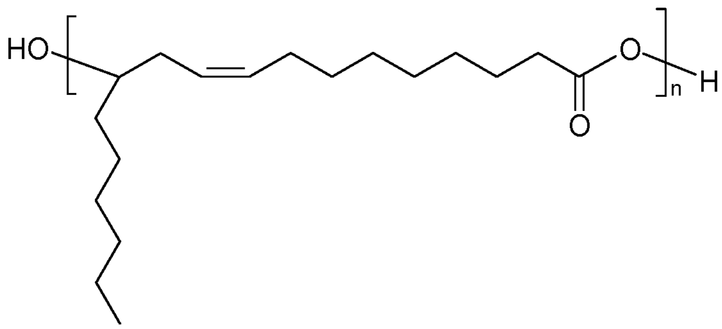

dans lequel n est tel que défini précédemment. Ce polymère correspond au poly(acide ricinoléique).

Selon un mode de réalisation, la présente invention concerne une composition constituée:

- d'une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- d'au moins un polymère de formule (I), à l'exception du poly(acide ricinoléïque); et
- d'éventuellement au moins un autre polymère notamment choisi parmi le poly(butadiène), le poly(isoprène), le poly(ε-caprolactone), le poly(tétrahydrofurane), poly(propylène glycol) et le poly(oxyde de propylène).

La présente invention concerne également une composition constituée :

- d'une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- d'au moins 5% en masse d'un polymère de formule (I) par rapport à la masse totale de ladite composition; et
- d'éventuellement au moins un autre polymère notamment choisi parmi le poly(butadiène), le poly(isoprène), le

poly(ε-caprolactone), le poly(tétrahydrofurane), poly(propylène glycol) et le poly(oxyde de propylène).

Selon un mode de réalisation, dans les compositions susmentionnées, les polymères de formule (I) tels que définis ci-dessus répondent à la formule (I-1).

Selon un mode de réalisation, les compositions susmentionnées peuvent comprendre un mélange de polymères de formule (I).

En particulier, ces mélanges de polymères de formule (I) peuvent être :

- des mélanges de polymères de formule (I) ;
- des mélanges de polymères de formules (I) et (I-1) ;
- des mélanges de polymères de formule (I-1).

Selon un mode de réalisation, un mélange de polymères de formule (I) peut correspondre à un mélange de polymères de formule (I) pour lesquels au moins un radical $A_{1i}$, $A_{2i}$ et/ou $X_{1i}$ a une définition différente ou n a une valeur différente

Selon un mode de réalisation, l'invention concerne une composition constituée d'une matrice de poly(acide lactique), et d'au moins un polymère répondant à l'une des formules (I), (I-1) ou leurs mélanges.

Selon un mode de réalisation, l'invention concerne une composition constituée d'une matrice de poly(acide lactique), et d'au moins 5% en masse d'un polymère répondant à l'une des formules (I), (I-1) ou leurs mélanges, par rapport à la masse totale de ladite composition.

Selon un mode de réalisation, l'invention concerne des compositions constituées de 5% à 20% en masse d'un copolymère de formule (I), par rapport à la masse totale de la composition.

Selon un mode de réalisation, l'invention concerne des compositions constituées de 60% à 95% en masse, de préférence de 80% à 90%, de la matrice polymère susmentionnée.

Selon un mode de réalisation, l'invention concerne des compositions constituées de 95% en masse de ladite matrice polymère et de 5% en masse d'un polymère de formule (I).

Selon un mode de réalisation, l'invention concerne des compositions constituées de 90% en masse de ladite matrice polymère et de 10% en masse d'un polymère de formule (I).

Selon un mode de réalisation, l'invention concerne des compositions constituées de 85% en masse de ladite matrice polymère et de 15% en masse d'un polymère de formule (I).

Selon un mode de réalisation, l'invention concerne des compositions constituées de 80% en masse de ladite matrice polymère et de 20% en masse d'un polymère de formule (I).

Les compositions selon l'invention peuvent être obtenues par extrusion classique, et notamment par extrusion à l'aide d'un extrudeur bi-vis.

Les compositions selon l'invention peuvent ainsi prendre différentes formes à la sortie de l'extrudeur selon l'usage auquel elles sont destinées (granulés, fils, fibres, filaments par filage en fondu).

La présente invention concerne un procédé de préparation d'une composition selon l'invention comprenant une étape de mélange, notamment de mélange mécanique par extrusion classique, d'au moins un polymère de formule (I) telle que définie ci-dessus, d'une matrice polymère susmentionnée, et éventuellement d'au moins un autre polymère notamment choisi parmi le poly(butadiène), le poly(isoprène), le poly(ε-caprolactone), le poly(tétrahydrofurane), poly(propylène glycol) et le poly(oxyde de propylène), ladite étape de mélange étant réalisée à une température comprise de 180°C à 190°C, pendant moins de 15 minutes.

Selon un mode de réalisation, l'étape de mélange est réalisée par extrusion à l'aide d'un extrudeur bi-vis.

Selon un mode de réalisation, l'étape de mélange est réalisée à 180°C pendant 5 minutes.

Selon l'invention, le temps de mélange est suffisamment court pour éviter que ne se créent des liaisons covalentes entre le polymère de formule (I), la matrice polymère, et éventuellement un autre polymère notamment choisi parmi le poly(butadiène), le poly(isoprène), le poly(ε-caprolactone), le poly(tétrahydrofurane), poly(propylène glycol) et le poly(oxyde de propylène). Il s'agit avantageusement d'un mélange physique desdits composés susmentionnés.

Ainsi, la présente invention concerne avantageusement des compositions de matériaux thermoplastiques améliorés comprenant au moins une matrice polymère, notamment poly(acide lactique).

Il est connu que le caractère cassant d'un polymère peut être limité par dispersion d'un polymère souple dans la matrice du polymère à améliorer. Toutefois, il est connu de l'état de la technique que l'incompatibilité de la phase dispersée et de la phase dispersante (matrice) amène le plus souvent à une ségrégation de phase à l'échelle macroscopique qui détériore les propriétés mécaniques du mélange dans le temps.

Ainsi, il a été montré que l'utilisation d'au moins un polymère de formule (I), (I-1) ou leurs mélanges, dans une matrice polymère comprenant éventuellement un polymère souple, permet avantageusement d'augmenter le renfort aux chocs de ladite matrice de polymère tout en limitant les problèmes d'incompatibilité, et notamment en limitant les problèmes de ségrégation de phase comme observé en l'absence des composés selon l'invention.

Les polymères de formule (I) ou (I-1) sont particulièrement intéressants comme additifs dans la mesure où ils sont issus des bioressources.

L'utilisation des polymères de formules (I) ou (I-1) permet avantageusement d'augmenter le renfort aux chocs d'une matrice polymère, notamment choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine, sans trop affecter les autres propriétés mécaniques du polymère de ladite matrice. Plus particulièrement, l'utilisation des composés de formules (I) ou (I-1) selon l'invention permet avantageusement d'augmenter l'élongation à la rupture du polymère de ladite matrice, et permet ainsi de rendre le polymère moins cassant et/ou d'améliorer sa capacité de déformation à chaud et/ou à froid. En particulier, il est connu que le PLA est facilement cassant. Ainsi, l'utilisation de polymères de formules (I) ou (I-1) selon l'invention permet avantageusement d'augmenter le renfort aux chocs du PLA, et donc de le rendre moins cassant. Le PLA casse donc à des élongations bien plus élevées que sans utilisation des polymères de formules (I) ou (I-1) selon l'invention.

De plus, l'utilisation des polymères de formules (I) ou (I-1) comme additifs à une matrice PLA permet avantageusement d'aider à la nanostructuration du polymère de ladite matrice, et notamment à la cristallisation de ladite matrice polymère. L'incorporation de polymères de formule (I) ou (I-1) permet avantageusement d'augmenter significativement le taux de cristallinité d'une matrice PLA, ainsi que la cinétique de cristallisation de ladite matrice.

En outre, le renfort aux chocs d'une matrice polymère notamment choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine, et notamment de PLA, ainsi que l'aide à la nanostructuration ont avantageusement été observés en limitant les problèmes d'incompatibilité entre la matrice et les additifs, contrairement à ce qui est observé typiquement avec les polymères décrits dans l'état de la technique.

Enfin, les compositions selon l'invention sont également avantageuses dans la mesure où elles sont composées notamment de PLA et de polymères de formule (I), et notamment de poly(ricinoléate de méthyle) qui sont issus des bioressources. Lesdites compositions possèdent donc de bonnes propriétés de biocompostabilité.

Les exemples suivants permettent d'illustrer la présente invention sans toutefois la limiter.

## Exemples

Abréviations :

- PLA : poly(acide lactique)
- PLLA : poly(acide L-lactique)

Fournisseurs :

- Ricinoléate de méthyle 85% : ITERG
- $Ti(OBu)_4$ 99% : Sigma Aldrich

### Exemple 1 : Préparation du poly(ricinoléate de méthyle) (2)

Le poly(ricinoléate de méthyle) PRic a été obtenu par polycondensation du ricinoléate de méthyle (1) à 180°C sous vide dynamique pendant 24h en utilisant du $Ti(OBu)_4$ en tant que catalyseur. Le matériau a ensuite été analysé par SEC révélant une masse molaire en nombre de 12 600 g/mol et une dispersité de 2,02. Une analyse par DSC a quant à elle permis de mesurer une Tg de - 70°C.

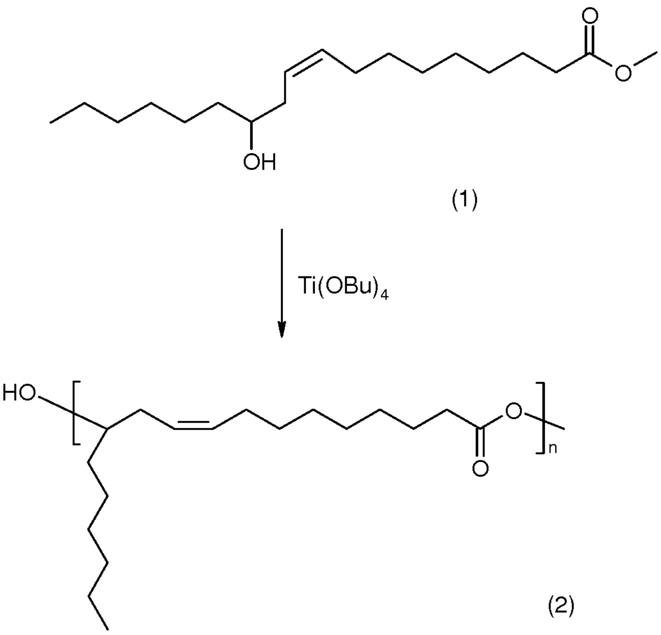


(1)

(2)

**Exemple 2** : **Etude de mélanges binaires**

Des mélanges binaires du polymère (2) avec du PLLA ont été réalisés par extrusion bi-vis à 180°C pendant 5 minutes. Les extrudats ont été analysés par DSC, DMA ainsi que par MEB afin d'évaluer la morphologie du mélange ainsi que les propriétés thermomécaniques.

Pour les analyses DSC, l'échantillon a préalablement été chauffé jusqu'à une température de 190°C avec une vitesse de chauffe de 10°C/min, puis refroidi jusqu'à -80°C à une vitesse de 10°C/min. Une deuxième chauffe jusqu'à 200°C a permis d'obtenir les différentes transitions physiques du matériau.

■ ***Cristallisation***

Premièrement, en observant le thermogramme DSC lors de la descente en température (10°C/min) à partir de l'état fondu, une cristallisation importante a été relevée pour les différents mélanges au vu de l'important exotherme vers 110-120°C. Dans le cas du PLLA seul, un très faible exotherme (1,76 J/g contre 31-37 J/g pour les mélanges) a été observé témoignant d'une faible cristallisation des chaînes PLLA. Cette cristallisation incomplète du PLLA seul se caractérise par une cristallisation à froid lorsque l'échantillon est chauffé à une vitesse de 10°C/min. En effet, le large exotherme vers 140°C lors de la chauffe signifie que les chaînes polymère, une fois au-dessus de la Tg, possèdent une mobilité suffisante pour induire la cristallisation des chaînes PLLA. Cette cristallisation à froid n'est pas visible pour les mélanges avec le polymère (2) du fait de la cristallisation complète des chaînes PLLA lors de la descente en température. Cette étude démontre donc le caractère nucléant des particules de polymère (2) sur la cristallisation du PLLA.

Concernant la température de fusion, il a été remarqué qu'elle reste constante (entre 173 et 179°C) malgré l'incorporation de polymère (2). Les valeurs d'enthalpies de fusion et de cristallisation à froid ont permis de mesurer le taux de cristallinité ($\chi_c$) du PLLA seul ainsi que du PLLA dans les mélanges selon la relation suivante :

$$\chi_c = \frac{\Delta H_m - \Delta H_{cc}}{\Delta H_m^0} \times \frac{1}{\omega}$$

où $\Delta H_m$ est l'enthalpie de fusion du PLLA, $\Delta H_{cc}$ l'enthalpie de cristallisation à froid, $\Delta H_m^0$ l'enthalpie de fusion d'un PLLA 100% cristallin (93 J/g) et $\omega$ la fraction massique de PLLA dans le mélange.

Les valeurs des taux de cristallinité en fonction du pourcentage massique de polymère (2) dans le mélange sont représentées dans le tableau suivant :

Tableau 1 : Taux de cristallinité du PLLA seul et du PLLA dans les mélanges.

| % en masse de PLLA (%) | $\chi^C$ (%) |
|---|---|
| 100 | 10 |
| 95 | 39,9 |
| 90 | 45,8 |
| 80 | 44,6 |

L'incorporation de polymère (2) dans une matrice de PLLA permet donc de significativement augmenter le taux de cristallinité. En effet, le taux de cristallinité du PLLA seul est de 10% et augmente jusqu'à 46% lorsque 10% de polymère (2) est introduit dans le mélange.

L'analyse mécanique dynamique du PLLA seul ainsi que des mélanges a également été réalisée afin de déterminer les propriétés spécifiques des mélanges. Dans le cas du PLLA seul, il a été constaté une chute brutale du module élastique autour de 60°C du fait de la transition vitreuse du polymère. Ceci se traduit par une forte intensité de la tan$\delta$ à cette température du fait du fort amortissement. La valeur du module élastique augmente ensuite à partir de 90°C pour atteindre une valeur de l'ordre de $0,5.10^8$Pa. Cette augmentation du module élastique est due à la cristallisation du PLLA engendrée par l'augmentation de la mobilité des chaînes après la transition vitreuse. Cet amortissement important lors de la Tg est l'un des inconvénients majeur du PLLA. Afin de pallier ceci, il convient d'augmenter la vitesse de cristallisation du PLLA afin de limiter la chute du module lors de la Tg. Ainsi il serait possible d'envisager diverses applications du PLLA à plus haute température. Or il a été montré précédemment par des analyses DSC que l'incorporation de polymère (2) permettait d'atteindre des taux de cristallinité plus importants.

Ceci est confirmé par analyse mécanique dynamique au vu de la limitation de la chute du module élastique lors de la Tg dans le cas des mélanges binaires. De plus, le module élastique aux plus fortes températures est plus important pour les mélanges que pour le PLLA seul, témoignant d'un taux de cristallinité plus important dans le cas des mélanges et donc d'une meilleure tenue mécanique. En observant la courbe de tan$\delta$ en fonction de la température dans le cas des mélanges, il a été aperçu certaines fluctuations de la tan$\delta$ entre la Tg du polymère (2) située vers -60°C et celle du PLLA située vers 60°C. Ceci témoigne de la miscibilité partielle du polymère (2) avec la matrice. Cependant une microséparation de phase est tout de même observée au vu des deux Tg distinctes des homopolymères. L'hypothèse d'une miscibilité partielle à l'interface entre les particules de polymère (2) et la matrice de PLLA peut donc être faite. Cette miscibilité partielle pourrait expliquer le caractère nucléant du polymère (2) sur la cristallisation du PLLA du fait de l'accentuation de la mobilité des chaînes PLLA.

La microséparation de phase a en effet pu être démontrée par microscopie électronique à balayage. Dans le cas des trois mélanges, la microstructure des échantillons se caractérise par des microdomaines de polymère (2) dans une matrice de PLLA. La taille moyenne des particules de polymère (2) dans les mélanges a pu être mesurée et figure dans le tableau 2 suivant. Cette taille moyenne varie très peu en fonction du pourcentage massique de polymère (2) dans le mélange. L'écart-type varie également très peu avec le pourcentage massique de polymère (2). Ceci montre bien que la miscibilité partielle du polymère (2) et du PLLA amène à une stabilisation de la phase dispersée du fait de la grande homogénéité de taille des particules.

Tableau 2 : Taille moyenne des particules de polymère (2) dans les différents mélanges binaires.

| % en masse du polymère (2) (%) | Taille moyenne des particules de polymère (2) ($\mu$m) |
|---|---|
| 5 | 1,88 $\pm$ 0.95 |
| 10 | 1,50 $\pm$ 0.64 |
| 20 | 2,05 $\pm$ 0.90 |

■ ***Essais mécaniques***

Des essais mécaniques en traction ont été réalisés sur les mélanges (tableau 3). Une transition fragile/ductile a été observée lorsque du polymère (2) est incorporé dans la matrice de PLA. En effet, un seuil d'écoulement apparaît avec l'ajout de polymère (2) qui permet au mélange de casser pour des élongations à la rupture allant de 14% à 197%, alors que le PLLA seul casse à une élongation de 4%. Le module d'Young varie très légèrement avec l'incorporation de polymère (2) dans le mélange. Celui-ci passe de 1,5GPa à 1,2GPa lorsque 10% en masse de polymère (2) est introduit dans la matrice de PLLA. Cette diminution modérée du module d'Young ainsi que de la contrainte maximale peut s'expliquer par le taux de cristallinité plus élevé dans le cas des mélanges.

Tableau 3 : Propriétés mécaniques du PLLA et des mélanges binaires.

| % en masse du polymère (2) | Module (Mpa) | E Contrainte (Mpa) | Elongation à la rupture (%) |
|---|---|---|---|
| 0% | 1510 ± 304 | 47,1 ± 6.0 | 3,8 ± 1,4 |
| 5% | 1018 ± 41 | 46,0 ± 1.8 | 14,3 ± 4,0 |
| 10% | 1201 ± 43 | 43,6 ± 2,9 | 155,4 ± 61,5 |
| 20% | 1141 ± 64 | 47,1 ± 0,5 | 197,5 ± 25,4 |

Cette étude a montré que l'incorporation de polymère (2) dans la matrice PLLA permet non seulement de renforcer le PLLA au vu de l'augmentation significative de l'élongation à la rupture dans le cas des mélanges, mais permet également d'améliorer la cinétique de cristallisation de la matrice. Ce système d'amélioration des propriétés du PLLA présente les avantages d'être simple à mettre en oeuvre et peu coûteux. En effet, l'additif à incorporer dans la matrice PLLA est obtenu en deux étapes à partir de l'huile de ricin, une matière première peu coûteuse, non alimentaire et déjà utilisée industriellement. Une première étape de transesterification de l'huile de ricin avec du méthanol permet d'obtenir le ricinoléate de méthyle qui est ensuite polymérisé pour donner le poly(ricinoléate de méthyle). Concernant la mise en oeuvre des mélanges, elle se fait par extrusion bi-vis à l'état fondu. Cette méthode est couramment utilisée à l'échelle industrielle et permet d'obtenir une dispersion fine de l'additif dans la matrice, critère primordial au bon renforcement du polymère.

**Revendications**

1. Utilisation de polymères de formule (I) suivante :

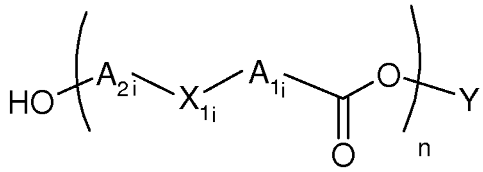

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;
- n représente un nombre entier compris de 2 à 1000, de préférence de 2 à 500, et préférentiellement de 2 à 100 ;

à condition que le nombre total d'atomes de carbone des radicaux $A_{2i}$, $X_{1i}$ et $A_{1i}$ soit supérieur ou égal à 8, de préférence supérieur ou égal à 10 ;
comme additifs dans une matrice polymère choisie dans le groupe constitué des matrices de polyester, de poly(chlorure de vinyle), de polyuréthane, de polyamide,
de poly(acrylate d'alkyle), de poly(méthacrylate d'alkyle), de polystyrène et de polyoléfine, ledit polymère de formule (I) étant différent du poly(acide ricinoléïque) répondant à la formule suivante :

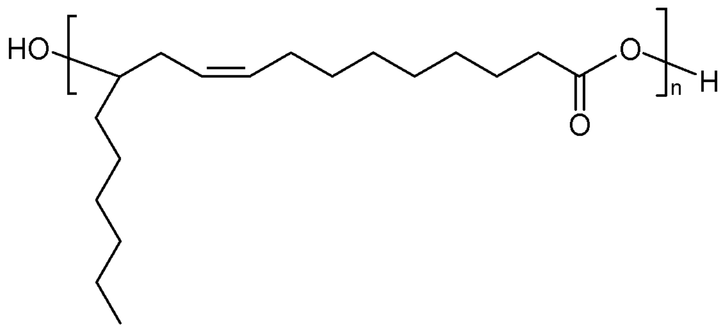

dans lequel n est tel que défini précédemment.

**2.** Utilisation selon la revendication 1, de polymères de formule (I-1) :

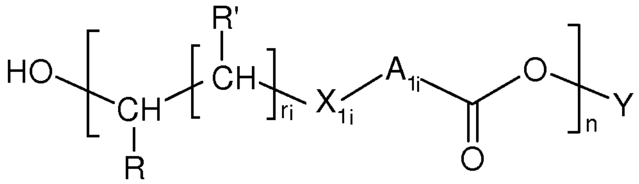

(I-1)

dans laquelle :

- $X_{1i}$, $A_{1i}$, Y et n sont tels que définis dans la revendication 1 ;
- R représente H ou un radical alkyle divalent, linéaire ou ramifié, comprenant de 1 à 20 atomes de carbone, de préférence de 2 à 10, préférentiellement de 4 à 9, ledit radical alkyle étant éventuellement substitué par au moins un groupe OAlk, Alk étant tel que défini précédemment ;
- R' représente H ou un groupe OAlk, Alk étant tel que défini précédemment ;
- $r_i$ représente un nombre entier compris de 0 à 5, de préférence de 0 à 2.

**3.** Utilisation selon l'une quelconque des revendications 1 ou 2, dans laquelle au moins un groupe $A_{1i}$ comprend au moins une insaturation.

**4.** Utilisation selon l'une quelconque des revendications 1 à 3, dans laquelle au moins un groupe $X_{1i}$ représente S.

**5.** Utilisation selon l'une quelconque des revendications 1 à 4, d'additifs choisis dans le groupe constitué des polymères répondant à l'une des formules suivantes :

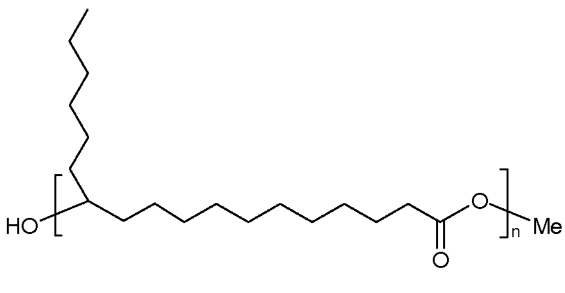

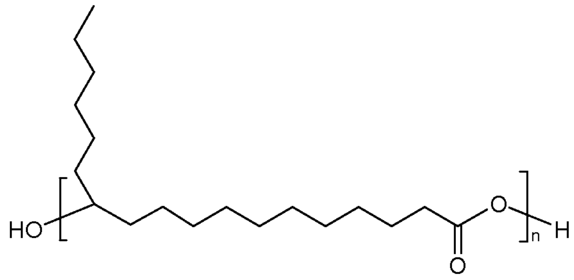

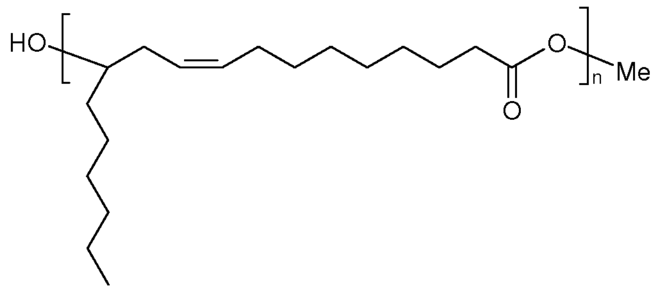

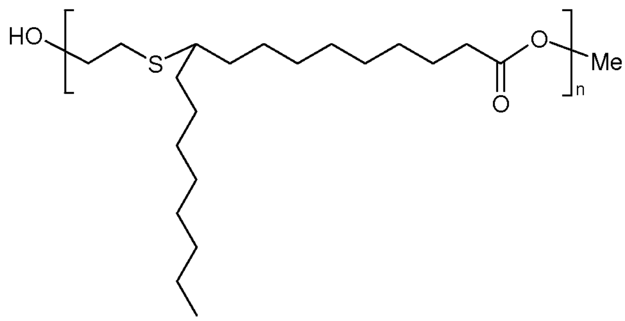

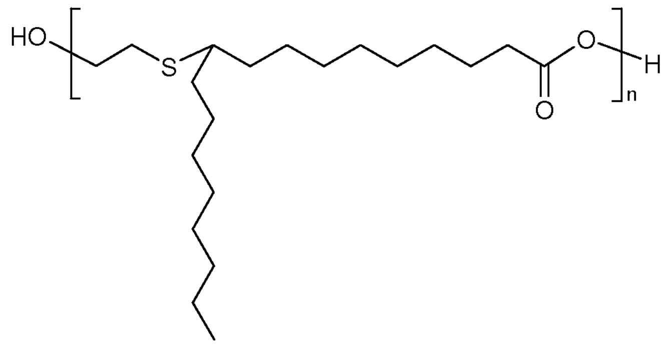

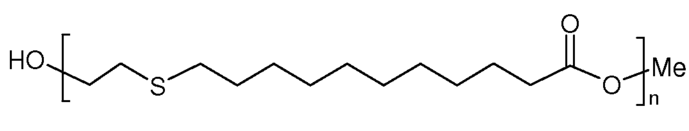

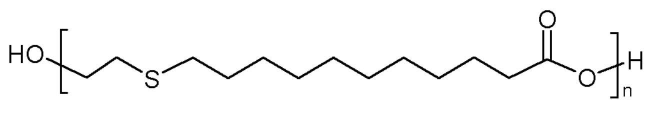

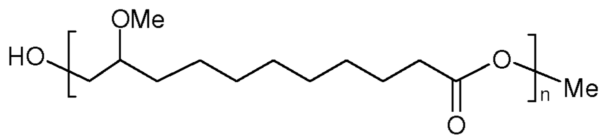

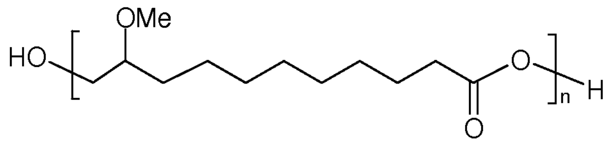

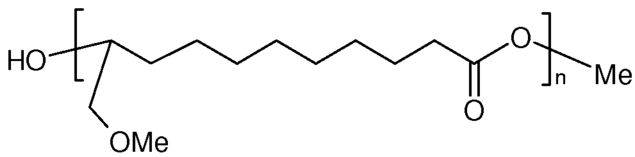

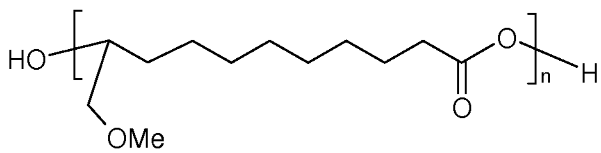

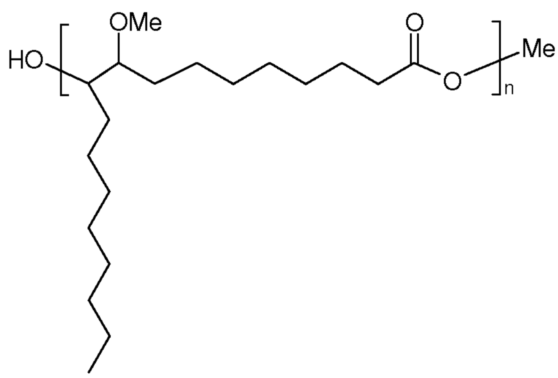

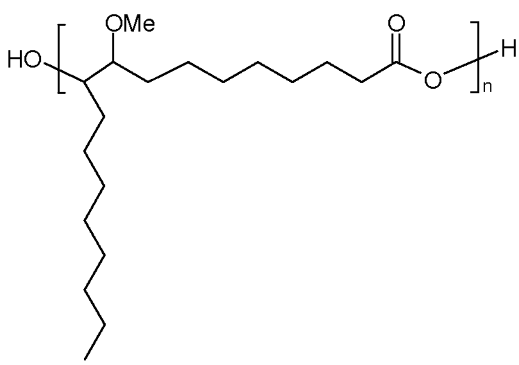

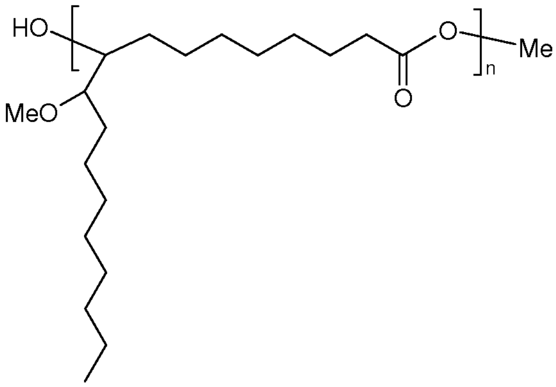

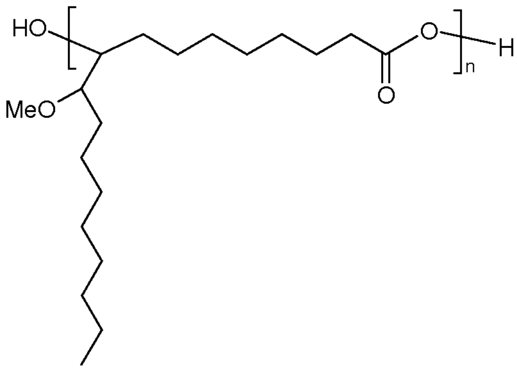

n est tel que défini dans la revendication 1.

6. Utilisation selon l'une quelconque des revendications 1 à 5, dans laquelle l'additif est le composé poly(ricinoléate de méthyle) de formule suivante :

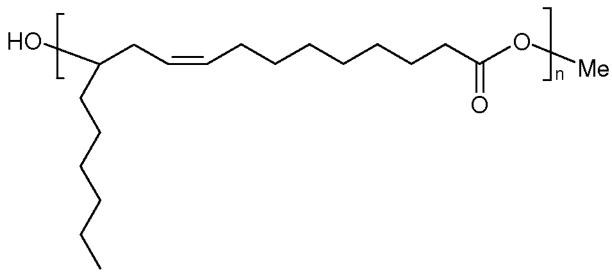

n étant tel que défini dans la revendication 1.

7. Utilisation selon l'une quelconque des revendications 1 à 6, pour améliorer le renfort aux chocs de la matrice polymère et/ou pour aider à la nanostructuration de ladite matrice.

8. Utilisation selon l'une quelconque des revendications 1 à 7, dans laquelle la matrice polymère est une matrice de poly(acide lactique).

9. Composition comprenant :

- une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- au moins un polymère de formule (I) :

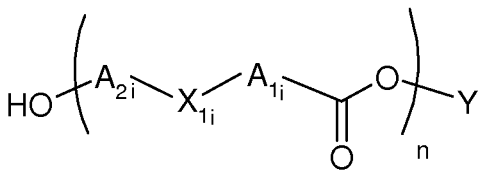

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;
- n représente un nombre entier compris de 2 à 1000, de préférence de 2 à 500, et préférentiellement de 2 à 100 ;

à condition que le nombre total d'atomes de carbone des radicaux $A_{2i}$, $X_{1i}$ et $A_{1i}$ soit supérieur ou égal à 8, de préférence supérieur ou égal à 10,
à l'exception du poly(acide ricinoléïque) ; et
- éventuellement au moins un autre polymère notamment choisi parmi le poly(butadiène), le poly(isoprène), le poly(ε-caprolactone) et le poly(tétrahydrofurane).

**10.** Composition constituée :

- d'une matrice polymère choisie dans le groupe constitué des matrices de polyester, de poly(chlorure de vinyle), de polyuréthane, de polyamide, de poly(acrylate d'alkyle), de poly(méthacrylate d'alkyle), de polystyrène et de polyoléfine ;
- d'au moins un polymère de formule (I)

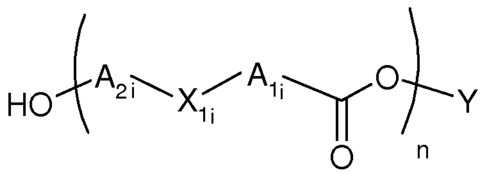

(I)

dans laquelle :

- $A_{1i}$ représente un radical alkylène divalent, linéaire ou ramifié, comprenant de 2 à 20 atomes de carbone, de préférence de 5 à 18, et préférentiellement de 6 à 17, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $A_{2i}$ représente un radical alkylène divalent, linéaire ou ramifié, comprenant de 2 à 20 atomes de carbone, de préférence de 2 à 15, et préférentiellement de 5 à 10, ledit radical comprenant éventuellement une ou plusieurs insaturations, et étant éventuellement substitué par au moins un substituant -OAlk, Alk représentant un groupe alkyle comprenant de 1 à 10 atomes de carbone ;
- $X_{1i}$ est choisi dans le groupe constitué de : -S-, $-CH_2-$ et une liaison ;
- Y représente H, un groupe phényle ou un groupe alkyle comprenant de 1 à 10 atomes de carbone;
- i représente un nombre entier variant de 1 à n ;

- n représente un nombre entier compris de 2 à 1000, de préférence de 2 à 500, et préférentiellement de 2 à 100 ; à condition que le nombre total d'atomes de carbone des radicaux $A_{2i}$, $X_{1i}$ et $A_{1i}$ soit supérieur ou égal à 8, de préférence supérieur ou égal à 10 ;

et

- d'éventuellement au moins un autre polymère notamment choisi parmi le poly(butadiène), le poly(isoprène), le poly($\varepsilon$-caprolactone) et le poly(tétrahydrofurane).

**11.** Composition selon la revendication 10, dans laquelle le polymère de formule

(I) répond à la formule (I-1) suivante :

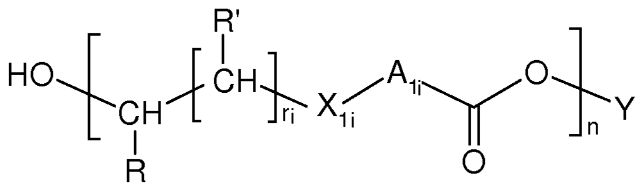

(I-1)

dans laquelle :

- $X_{1i}$, $A_{1i}$, Y et n sont tels que définis dans la revendication 1 ;
- R représente H ou un radical alkyle divalent, linéaire ou ramifié, comprenant de 1 à 20 atomes de carbone, de préférence de 2 à 10, préférentiellement de 4 à 9, ledit radical alkyle étant éventuellement substitué par au moins un groupe OAlk, Alk étant tel que défini précédemment ;
- R' représente H ou un groupe OAlk, Alk étant tel que défini précédemment ;
- $r_i$ représente un nombre entier compris de 0 à 5, de préférence de 0 à 2.

**12.** Composition selon l'une quelconque des revendications 10 ou 11, constituée de 5% à 20% en masse d'un composé de formule (I), par rapport à la masse totale de la composition.

**13.** Composition selon l'une quelconque des revendications 10 ou 11, constituée de 60% à 95% en masse de la matrice polymère, par rapport à la masse totale de la composition.

**14.** Procédé de préparation d'une composition selon l'une quelconque des revendications 10 à 12, comprenant une étape de mélange d'au moins un polymère de formule (I) selon l'une quelconque des revendications 10 à 12, et d'une matrice polymère selon l'une quelconque des revendications 10 à 12, ladite étape de mélange étant réalisée à une température comprise de 180°C à 190°C, pendant moins de 15 minutes.

**15.** Procédé selon la revendication 14, dans lequel l'étape de mélange est réalisée à 180°C pendant 5 minutes.

## Patentansprüche

**1.** Verwendung von Polymeren mit folgender Formel (I):

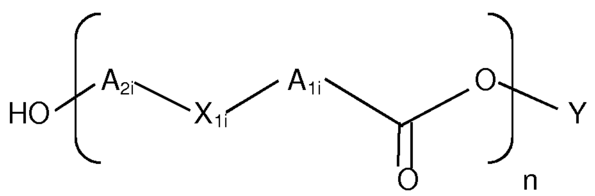

(I)

in welcher:

- $A_{1i}$ einen zweiwertigen Alkylenrest darstellt, der linear oder verzweigt ist, umfassend 2 bis 20 Kohlenstoffatome, vorzugsweise 5 bis 18, und bevorzugt 6 bis 17, wobei der besagte Rest eventuell eine oder mehrere ungesättigte Stellen umfasst und eventuell mit mindestens einem -OAlk-Substituenten substituiert ist, wobei Alk eine Alkylgruppe darstellt, die 1 bis 10 Kohlenstoffatome umfasst;
- $A_{2i}$ einen zweiwertigen Alkylenrest darstellt, der linear oder verzweigt ist, umfassend 2 bis 20 Kohlenstoffatome, vorzugsweise 2 bis 15, und bevorzugt 5 bis 10, wobei der besagte Rest eventuell eine oder mehrere ungesättigte Stellen umfasst und eventuell mit mindestens einem -OAlk-Substituenten substituiert ist, wobei Alk eine Alkylgruppe darstellt, die 1 bis 10 Kohlenstoffatome umfasst;
- $X_{1i}$ aus der Gruppe ausgewählt wird, die gebildet ist aus: -S-, $-CH_2-$ und einer Verbindung;
- Y H, eine Phenylgruppe oder eine Alkylgruppe, die 1 bis 10 Kohlenstoffatome umfasst, darstellt,
- i eine ganze Zahl von 1 bis n darstellt;
- n eine ganze Zahl zwischen 2 und 1.000 darstellt, vorzugsweise 2 bis 500, und bevorzugt 2 bis 100;

unter der Voraussetzung, dass die Gesamtzahl an Kohlenstoffatomen der Reste $A_{2i}$, $X_{1i}$ und $A_{1i}$ höher oder gleich 8 ist, vorzugsweise höher oder gleich 10;
als Zusätze in einer Polymermatrix, ausgewählt aus der Gruppe bestehend aus den Polyester-, Poly(vinylchlorid)-, Polyurethan-, Polyamid-, Poly(alkylacrylat)-, Poly(alkylmethacrylat)-, Polystyren- und Polyolefin-Matrices,
wobei das besagte Polymer der Formel (I) sich von der Poly(ricinolsäure) unterscheidet, die der folgenden Formel entspricht:

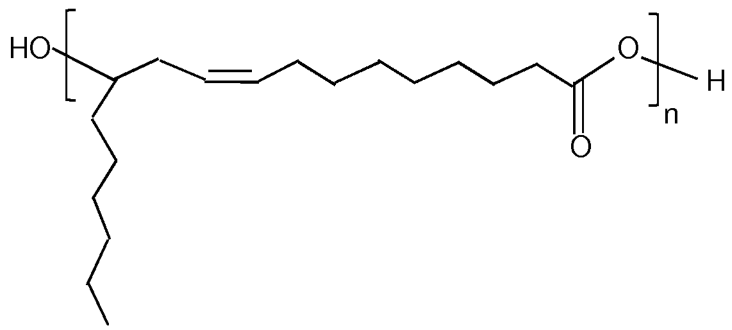

in welcher n wie vorstehend definiert ist.

2. Verwendung nach Anspruch 1, von Polymeren der Formel (I-1):

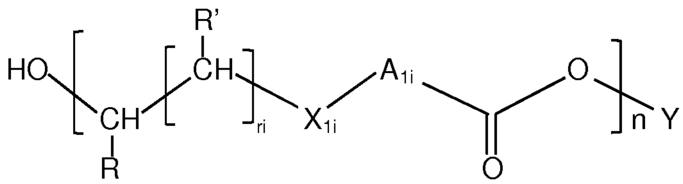

(I-1)

in welcher:

- $X_{1i}$, $A_{1i}$, Y und n wie im Anspruch 1 definiert sind;
- R H oder einen zweiwertigen Alkylrest darstellt, der linear oder verzweigt ist, umfassend 1 bis 20 Kohlenstoffatome, vorzugsweise 2 bis 10, bevorzugt 4 bis 9, wobei der besagte Alkylrest eventuell mit mindestens einer OAlk-Gruppe substituiert ist, wobei Alk wie vorstehend definiert ist;
- R' H oder eine OAlk-Gruppe darstellt, wobei Alk wie vorstehend definiert ist;
- $r_i$ eine ganze Zahl zwischen 0 bis 5, vorzugsweise 0 bis 2, darstellt.

3. Verwendung nach einem der vorstehenden Ansprüche 1 oder 2, in welcher mindestens eine Gruppe $A_{1i}$ mindestens eine ungesättigte Stelle umfasst.

4. Verwendung nach einem der vorstehenden Ansprüche 1 bis 3, in welcher mindestens eine Gruppe $X_{1i}$ S darstellt.

**5.** Verwendung nach einem der Ansprüche 1 bis 4 von Zusätzen, ausgewählt aus der Gruppe bestehend aus den Polymeren, die einer der folgenden Formeln entsprechen:

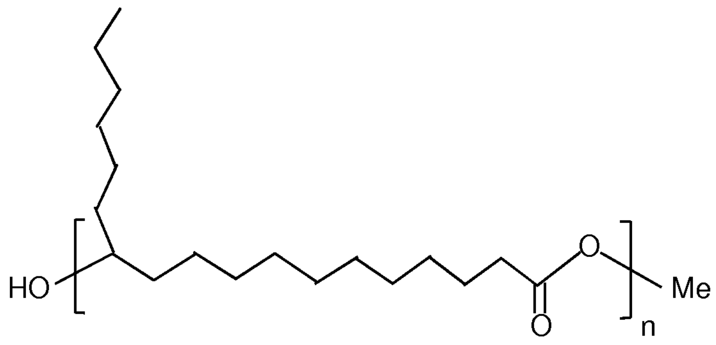

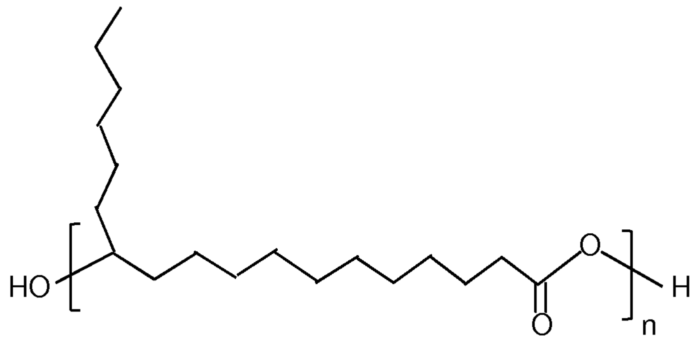

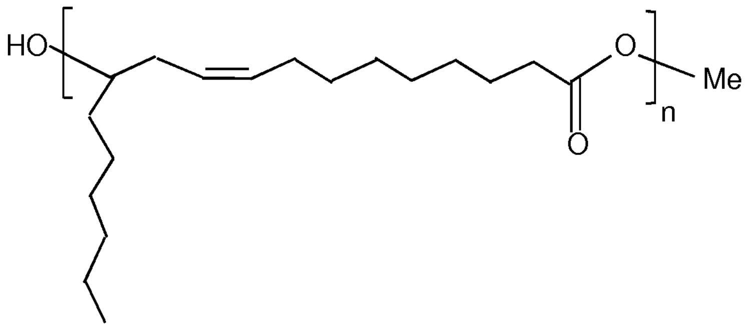

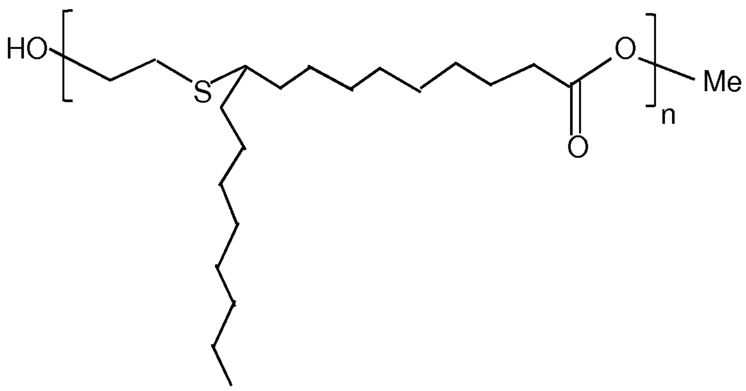

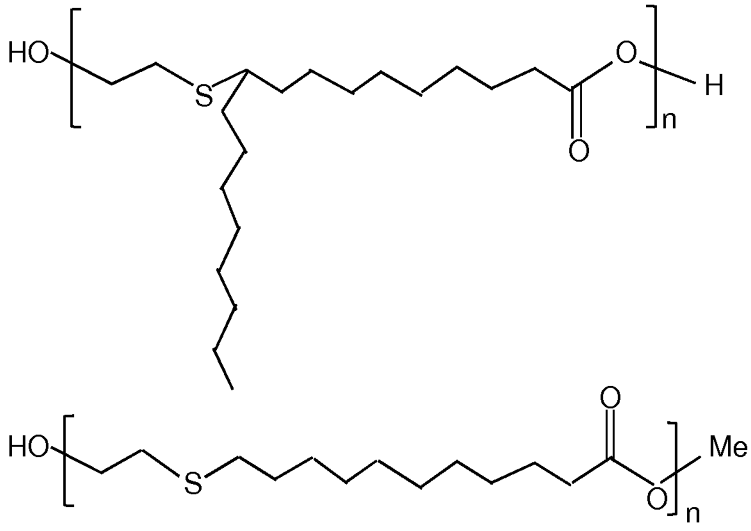

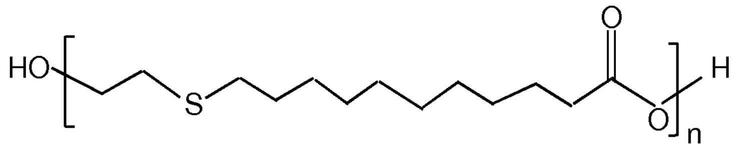

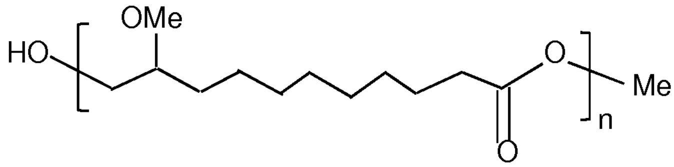

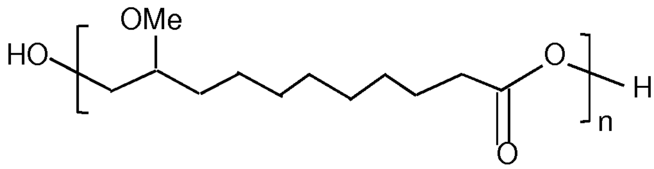

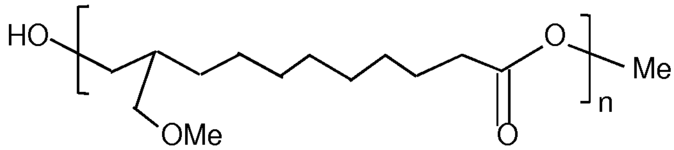

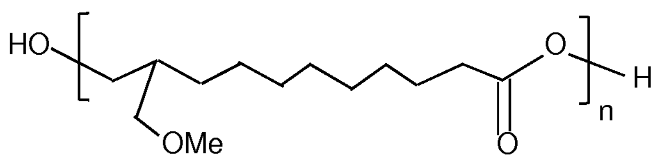

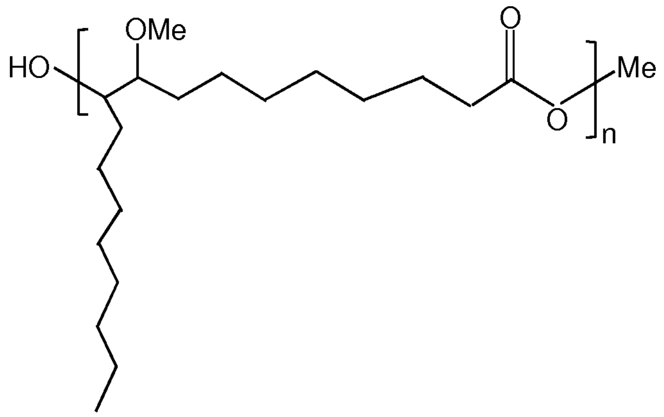

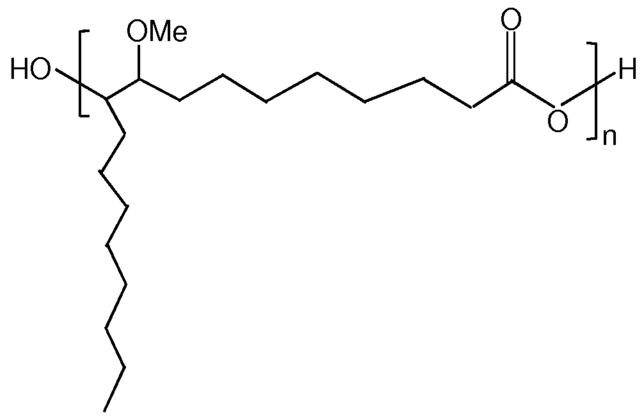

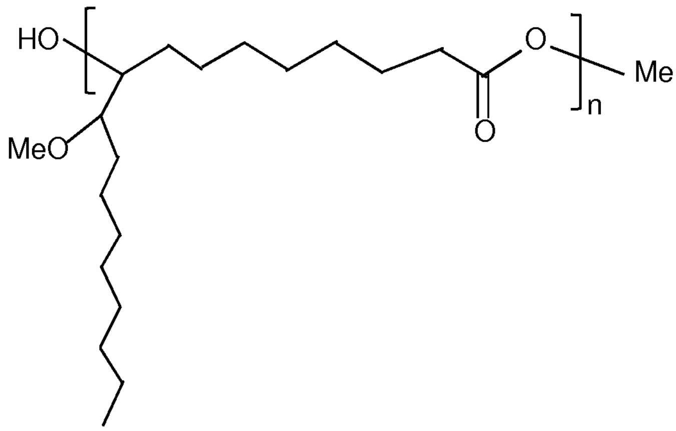

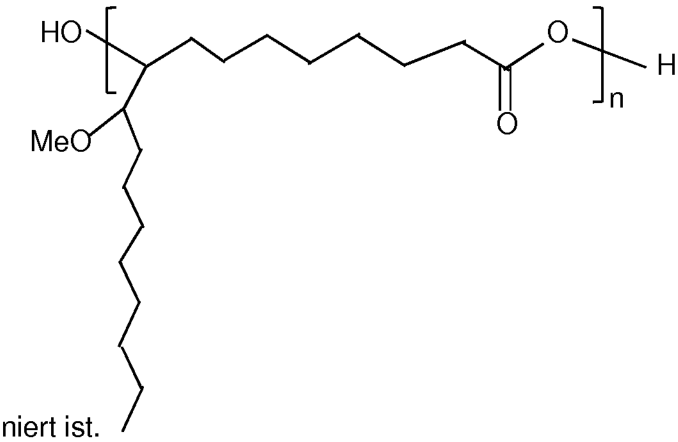

n wie im Anspruch definiert ist.

**6.** Verwendung nach einem der Ansprüche 1 bis 5, in welcher der Zusatz die Poly(methylricinoleat)-Verbindung mit folgender Formel ist:

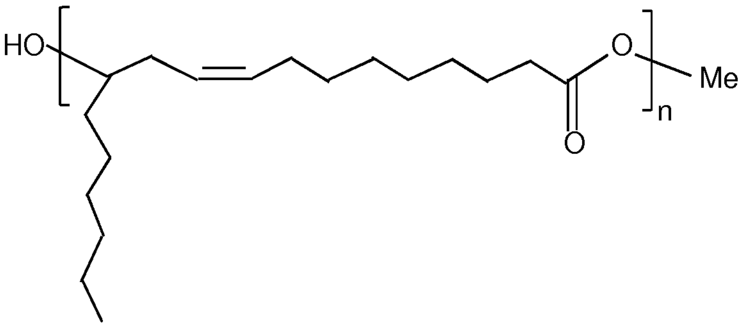

n wie im Anspruch 1 definiert ist.

**7.** Verwendung nach einem der Ansprüche 1 bis 6, um die Verstärkung vor Einwirkungen der Polymermatrix zu verbessern und/oder die Nanostrukturierung der besagten Matrix zu unterstützen.

**8.** Verwendung nach einem der Ansprüche 1 bis 7, in welcher die Polymermatrix eine Poly(milchsäure)-Matrix ist.

**9.** Zusammensetzung, die umfasst:

- eine Polymermatrix, ausgewählt aus der Gruppe bestehend aus den Polyester-, Poly(vinylchlorid)-, Polyurethan-, Polyamid-, Poly(alkylacrylat)-, Poly(alkylmethacrylat)-, Polystyren- und Polyolefin-Matrices;
- mindestens ein Polymer der Formel (I):

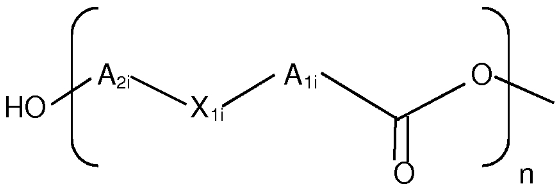

(I)

in welcher:

- $A_{1i}$ einen zweiwertigen Alkylenrest darstellt, der linear oder verzweigt ist, umfassend 2 bis 20 Kohlenstoffatome, vorzugsweise 5 bis 18, und bevorzugt 6 bis 17, wobei der besagte Rest eventuell eine oder mehrere ungesättigte Stellen umfasst und eventuell mit mindestens einem -OAlk-Substituenten substituiert ist, wobei

Alk eine Alkylgruppe darstellt, die 1 bis 10 Kohlenstoffatome umfasst;
- $A_{2i}$ einen zweiwertigen Alkylenrest darstellt, der linear oder verzweigt ist, umfassend 2 bis 20 Kohlenstoffatome, vorzugsweise 2 bis 15, und bevorzugt 5 bis 10, wobei der besagte Rest eventuell eine oder mehrere ungesättigte Stellen umfasst und eventuell mit mindestens einem -OAlk-Substituenten substituiert ist, wobei Alk eine Alkylgruppe darstellt, die 1 bis 10 Kohlenstoffatome umfasst;
- $X_{1i}$ aus der Gruppe ausgewählt wird, die gebildet ist aus: -S-, $-CH_2-$ und einer Verbindung;
- Y H, eine Phenylgruppe oder eine Alkylgruppe, die 1 bis 10 Kohlenstoffatome umfasst, darstellt;
- i eine ganze Zahl von 1 bis n darstellt;
- n eine ganze Zahl zwischen 2 und 1.000 darstellt, vorzugsweise 2 bis 500, und bevorzugt 2 bis 100;

unter der Voraussetzung, dass die Gesamtzahl an Kohlenstoffatomen der Reste $A_{2i}$, $X_{1i}$ und $A_{1i}$ höher oder gleich 8 ist, vorzugsweise höher oder gleich 10,
mit Ausnahme der Poly(ricinoleinsäure); und
- eventuell mindestens ein anderes Polymer, hauptsächlich ausgewählt aus Poly(butadien), Poly(isopren), Poly(ε-caprolacton) und Poly(tetrahydrofuran).

**10.** Zusammensetzung, bestehend aus:

- einer Polymermatrix, ausgewählt aus der Gruppe bestehend aus den Polyester-, Poly(vinylchlorid)-, Polyurethan-, Polyamid-, Poly(alkylacrylat)-, Poly(alkylmethacrylat)-, Polystyren- und Polyolefin-Matrices;
- mindestens einem Polymer der Formel (I)

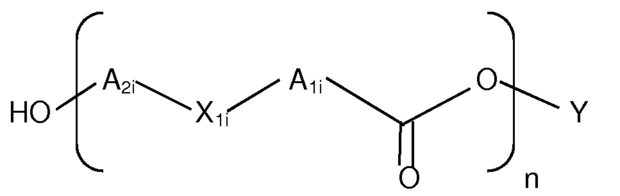

(I)

in welcher:

- $A_{1i}$ einen zweiwertigen Alkylenrest darstellt, der linear oder verzweigt ist, umfassend 2 bis 20 Kohlenstoffatome, vorzugsweise 5 bis 18, und bevorzugt 6 bis 17, wobei der besagte Rest eventuell eine oder mehrere ungesättigte Stellen umfasst und eventuell mit mindestens einem -Oalk-Substituenten substituiert ist, wobei Alk eine Alkylgruppe darstellt, die 1 bis 10 Kohlenstoffatome umfasst;
- $A_{2i}$ einen zweiwertigen Alkylenrest darstellt, der linear oder verzweigt ist, umfassend 2 bis 20 Kohlenstoffatome, vorzugsweise 2 bis 15, und bevorzugt 5 bis 10, wobei der besagte Rest eventuell eine oder mehrere ungesättigte Stellen umfasst und eventuell mit mindestens einem -OAlk-Substituenten substituiert ist, wobei Alk eine Alkylgruppe darstellt, die 1 bis 10 Kohlenstoffatome umfasst;
- $X_{1i}$ aus der Gruppe ausgewählt wird, die gebildet ist aus: -S-, $-CH_2-$ und einer Verbindung;
- Y H, eine Phenylgruppe oder eine Alkylgruppe, die 1 bis 10 Kohlenstoffatome umfasst, darstellt;
- i eine ganze Zahl von 1 bis n darstellt;
- n eine ganze Zahl zwischen 2 und 1.000 darstellt, vorzugsweise 2 bis 500, und bevorzugt 2 bis 100;
unter der Voraussetzung, dass die Gesamtzahl an Kohlenstoffatomen der Reste $A_{2i}$, $X_{1i}$ und $A_{1i}$ höher oder gleich 8 ist, vorzugsweise höher oder gleich 10;

- eventuell mindestens einem anderen Polymer, hauptsächlich ausgewählt aus Poly(butadien), Poly(isopren), Poly(ε-caprolacton) und Poly(tetrahydrofuran).

**11.** Zusammensetzung nach Anspruch 10, in welcher das Polymer der Formel (I) der folgenden Formel (I-1) entspricht:

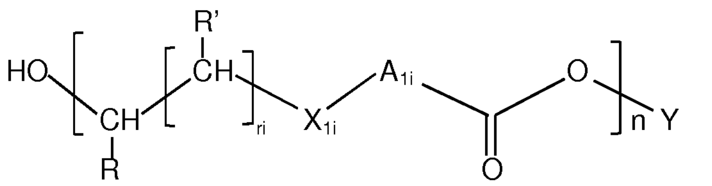

(I-1)

in welcher:

- $X_{1i}$, $A_{1i}$, Y und n wie im Anspruch 1 definiert sind;
- R H oder einen zweiwertigen Alkylrest darstellt, der linear oder verzweigt ist, umfassend 1 bis 20 Kohlenstoffatome, vorzugsweise 2 bis 10, bevorzugter 4 bis 9, wobei der besagte Alkylrest eventuell mit mindestens einer OAlk-Gruppe substituiert ist, wobei Alk wie vorstehend definiert ist;
- R' H oder eine OAlk-Gruppe darstellt, wobei Alk wie vorstehend definiert ist;
- $r_i$ eine ganze Zahl zwischen 0 bis 5, vorzugsweise 0 bis 2, darstellt.

**12.** Zusammensetzung nach einem der Ansprüche 10 oder 11, bestehend aus 5 Gew.-% bis 20 Gew.-% einer Verbindung der Formel (I), in Bezug auf das Gesamtgewicht der Zusammensetzung.

**13.** Zusammensetzung nach einem der Ansprüche 10 oder 11, bestehend aus 60 Gew.-% bis 95 Gew.-% der Polymermatrix, in Bezug auf das Gesamtgewicht der Zusammensetzung.

**14.** Verfahren zur Zubereitung einer Zusammensetzung nach einem der Ansprüche 10 bis 12, umfassend einen Schritt des Mischens von mindestens einem Polymer der Formel (I) nach einem der Ansprüche 10 bis 12, und von einer Polymermatrix nach einem der Ansprüche 10 bis 12, wobei der besagte Schritt des Mischens bei einer Temperatur zwischen 180 °C bis 190 °C während mindestens 15 Minuten ausgeführt wird.

**15.** Verfahren nach Anspruch 14, in welchem der Schritt des Mischens bei 180 °C während 5 Minuten ausgeführt wird.

## Claims

**1.** The use of polymers of the following formula (I):

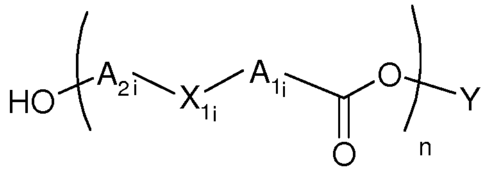

(I)

wherein:

- $A_{1i}$ represents a linear or branched divalent alkylene radical, comprising from 2 to 20 carbon atoms, preferably from 5 to 18, and preferentially from 6 to 17, said radical optionally comprising one or several unsaturations, and being optionally substituted with at least one -OAlk substituent, Alk representing an alkyl group comprising from 1 to 10 carbon atoms;
- $A_{2i}$ represents a linear or branched divalent alkylene radical comprising from 2 to 20 carbon atoms, preferably from 2 to 15, and preferentially from 5 to 10, said radical optionally comprising one or several unsaturations, and being optionally substituted with at least one -OAlk substituent, Alk representing an alkyl group comprising from 1 to 10 carbon atoms;
- $X_{1i}$ is selected from the group consisting of: -S-, $-CH_2-$ and a bond;
- Y represents H, a phenyl group or un alkyl group comprising from 1 to 10 carbon atoms;
- i represents an integer varying from 1 to n;
- n represents an integer comprised from 2 to 1,000, preferably from 2 to 500, and preferentially from 2 to 100;

provided that the total number of carbon atoms of the radicals $A_{2i}$, $X_{1i}$ and $A_{1i}$ is greater than or equal to 8, preferably greater than or equal to 10;
as additives in a polymeric matrix selected from the group consisting of matrices of polyester, poly(vinyl chloride), polyurethane, polyamide, poly(alkyl acrylate),
poly(alkyl methacrylate), polystyrene and polyolefin,
said polymer of formula (I) being different from poly(ricinoleic acid) fitting the following formula:

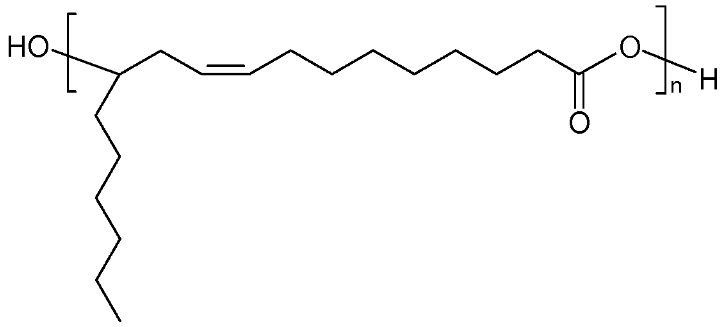

wherein n is as defined earlier.

2. The use according to claim 1, of polymers of formula (I-1):

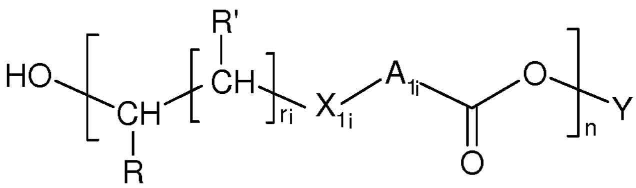

(I-1)

wherein:

- $X_{1i}$, $A_{1i}$, Y and n are as defined in claim 1;
- R represents H or a linear or branched divalent alkyl radical, comprising from 1 to 20 carbon atoms, preferably from 2 to 10, preferentially from 4 to 9, said alkyl radical being optionally substituted with at least one OAlk group, Alk being as defined earlier;
- R' represents H or an OAlk group, Alk being as defined earlier;
- $r_i$ represents an integer comprised from 0 to 5, preferably from 0 to 2.

3. The use according to any of claims 1 or 2, wherein at least one group $A_{1i}$ comprises at least one unsaturation.

4. The use according to any of claims 1 to 3, wherein at least one group $X_{1i}$ represents S.

5. The use according to any of claims 1 to 4, of additives selected from the group consisting of polymers fitting one of the following formulae:

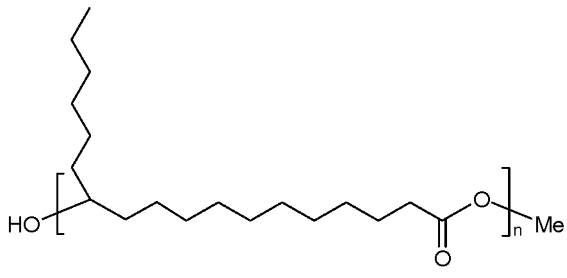

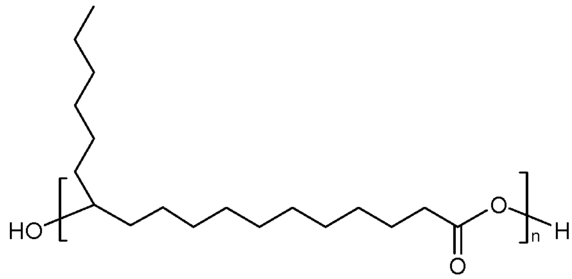

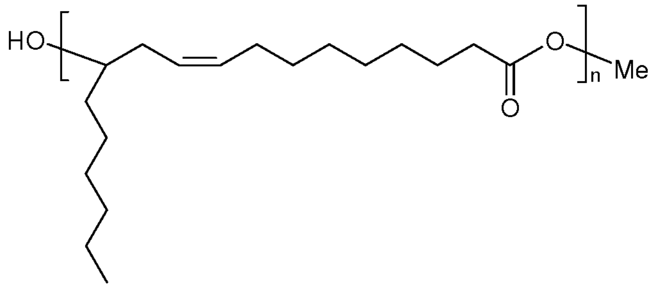

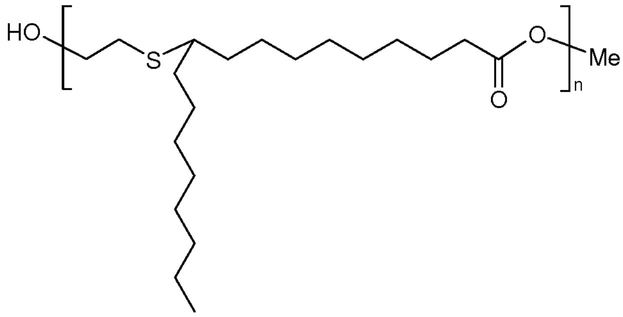

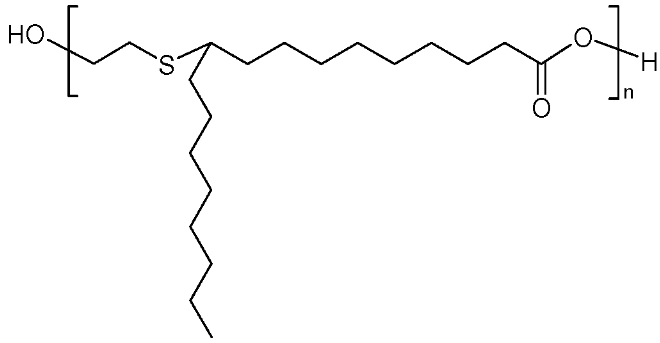

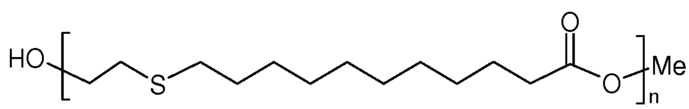

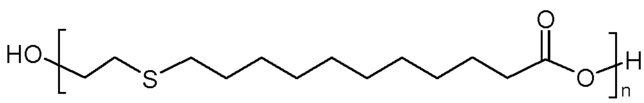

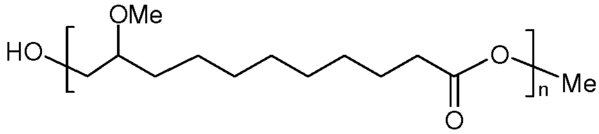

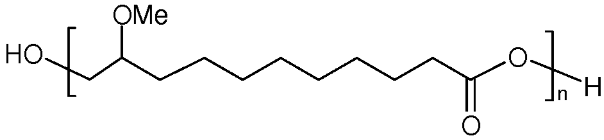

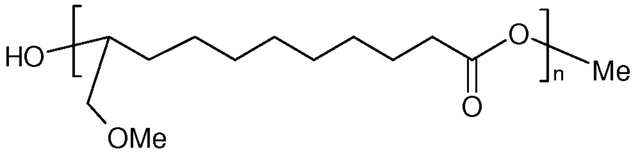

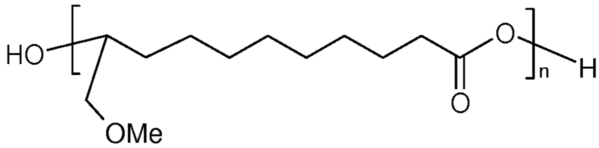

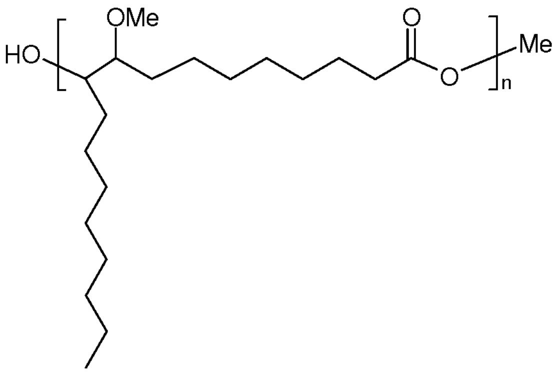

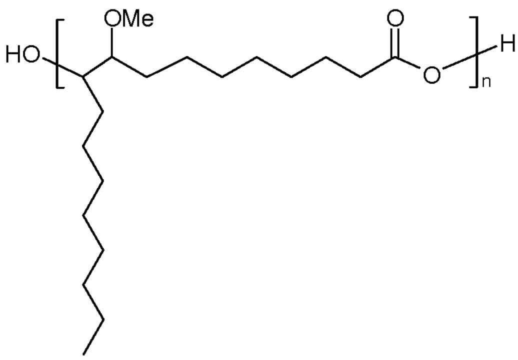

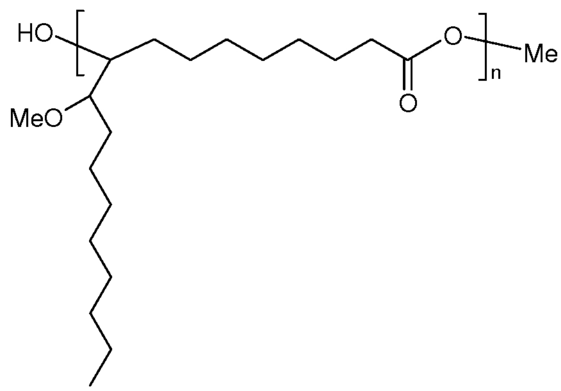

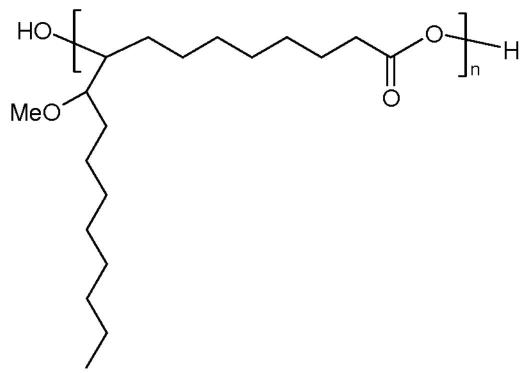

n is as defined in claim 1.

6. The use according to any of claims 1 to 5, wherein the additive is the compound, poly(methyl ricinoleate), of the following formula:

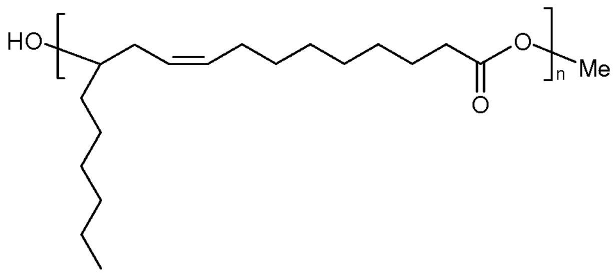

n being as defined in claim 1.

7. The use according to any of claims 1 to 6, for improving the reinforcement to impacts of the polymeric matrix and/or for assisting with nano-structuration of said matrix.

8. The use according to any of claims 1 to 7, wherein the polymeric matrix is a poly(lactic acid) matrix.

9. A composition comprising:

- a polymeric matrix selected from the group consisting of matrices of polyester, poly(vinyl chloride), polyurethane, polyamide, poly(alkyl acrylate), poly(alkyl methacrylate), polystyrene and polyolefin;
- at least one polymer of formula (I) :

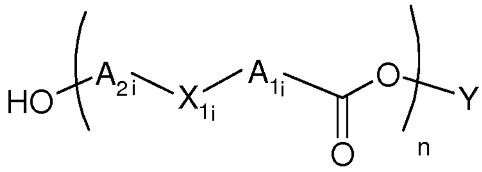

(I)

wherein:

- $A_{1i}$ represents a linear or branched divalent alkylene radical, comprising from 2 to 20 carbon atoms, preferably from 5 to 18 and preferentially from 6 to 17, said radical optionally comprising one or several unsaturations, and being optionally substituted with at least one -OAlk substituent, Alk representing an alkyl group comprising from 1 to 10 carbon atoms;
- $A_{2i}$ represents a linear or branched divalent alkylene radical, comprising from 2 to 20 carbon atoms, preferably from 2 to 15, and preferentially from 5 to 10, said radical optionally comprising one or several unsaturations, and being optionally substituted with at least one -OAlk substituent, Alk representing an alkyl group comprising from 1 to 10 carbon atoms;
- $X_{1i}$ is selected from the group consisting of: -S-, $-CH_2-$ and a bond;
- Y represents H, a phenyl group or an alkyl group comprising from 1 to 10 carbon atoms;
- i represents an integer varying from 1 to n;
- n represents an integer comprised from 2 to 1,000, preferably from 2 to 500, and preferentially from 2 to 100; provided that the total number of carbon atoms of the radicals $A_{2i}$, $X_{1i}$ and $A_{1i}$ is greater than or equal to 8, preferably greater than or equal to 10, except for poly(ricinoleic acid); and

- optionally at least one other polymer notably selected from poly(butadiene), poly(isoprene), poly(ε-caprolactone) and poly(tetrahydrofurane) .

**10.** A composition consisting of:

- a polymeric matrix selected from the group consisting of matrices of polyester, poly(vinyl chloride), polyurethane, polyamide, poly(alkyl acrylate), poly(alkyl methacrylate), polystyrene and polyolefin;
- at least one polymer of formula (I)

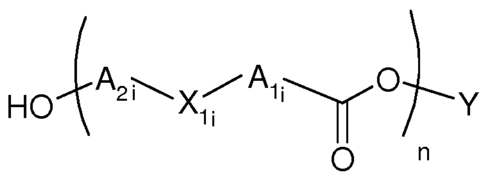

(I)

wherein:

- $A_{1i}$ represents a linear or branched divalent alkylene radical, comprising from 2 to 20 carbon atoms, preferably from 5 to 18, and preferentially from 6 to 17, said radical optionally comprising one or several unsaturations, and being optionally substituted with at least one -OAlk substituent, Alk representing an alkyl group comprising from 1 to 10 carbon atoms;
- $A_{2i}$ represents a linear or branched divalent alkylene radical, comprising from 2 to 20 carbon atoms, preferably from 2 to 15, and preferentially from 5 to 10, said radical optionally comprising one or several unsaturations, and being optionally substituted with at least one -OAlk substituent, Alk representing an alkyl group comprising from 1 to 10 carbon atoms;
- $X_{1i}$ is selected from the group consisting of: -S-, $-CH_2-$ and a bond;
- Y represents H, a phenyl group or an alkyl group comprising from 1 to 10 carbon atoms;
- i represents an integer varying from 1 to n;
- n represents an integer comprised from 2 to 1,000, preferably from 2 to 500, and preferentially from 2 to 100;
- provided that the total number of carbon atoms of the radicals $A_{2i}$, $X_{1i}$ and $A_{1i}$ is greater than or equal to 8, preferably greater than or equal to 10;

and
- optionally at least one other polymer notably selected from poly(butadiene), poly(isoprene), poly(ε-caprolactone) and poly(tetrahydrofurane).

**11.** The composition according to claim 10, wherein the polymer of formula (I) fits the following formula (I-1):

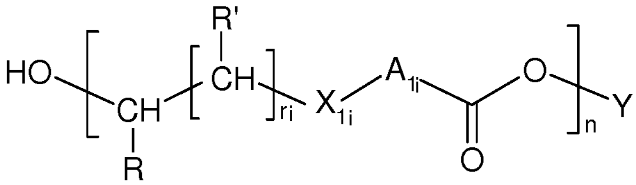

(I-1)

wherein:

- $X_{1i}$, $A_{1i}$, Y and n are as defined in claim 1;
- R represents H or a linear or branched divalent alkyl radical, comprising from 1 to 20 carbon atoms, preferably from 2 to 10, preferentially from 4 to 9, said alkyl radical being optionally substituted with at least one OAlk group, Alk being as defined earlier;
- R' represents H or an OAlk group, Alk being as defined earlier;
- $r_i$ represents an integer comprised from 0 to 5, preferably from 0 to 2.

**12.** The composition according to any of claims 10 or 11, consisting of 5% to 20% by mass of a compound of formula (I), based on the total mass of the composition.

**13.** The composition according to any of claims 10 or 11, consisting of 60% to 95% by mass of the polymeric matrix, based on the total mass of the composition.

**14.** A method for preparing a composition according to any of claims 10 to 12, comprising a step for mixing at least one polymer of formula (I) according to any of claims 10 to 12, and a polymeric matrix according to any of claims 10 to 12, said mixing step being carried out at a temperature comprised from 180°C to 190°C, for at least 15 minutes.

**15.** The method according to claim 14, wherein the mixing step is carried out at a 180°C for 5 minutes.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **ROBERTSON et al.** ACS APPLIED MATERIALS AND INTERFACES. AMERICAN CHEMICAL SOCIEIY, 28 Septembre 2011, vol. 3, 3402-3410